# EUROPEAN PATENT APPLICATION

(11) **EP 4 752 820 A1**
(43) Date of publication of application: **03.06.2026**
(21) Application number: 23947685.6
(22) Date of filing: 31.07.2023
(51) Int. Cl.: G06Q 50/40, G06Q 50/10, G06T 19/00, G06T 15/10, G06T 17/05, B60W 60/00

(54) **VEHICLE CALL SERVICE PROVIDING METHOD, VEHICLE CALL SERVICE PROVIDING SYSTEM, AND AR SERVICE PROVIDING DEVICE INTERACTING THEREWITH**

(71) Applicant: LG Electronics Inc., Yeongdeungpo-gu Seoul 07336 (KR)
(72) Inventor: SEO, Jungryul, Seoul 06772 (KR); CHOI, Sunghwan, Seoul 06772 (KR); KIM, Taekyoung, Seoul 06772 (KR); LEE, Heemin, Seoul 06772 (KR)
(74) Representative: Vossius & Partner Patentanwälte Rechtsanwälte mbB
(86) International application number: PCT/KR2023/011160
(87) International publication number: WO 2025/028680

(57) **Abstract**

An AR service providing device according to an embodiment of the present invention comprises: a communication unit for acquiring location information of a called vehicle; a display on which an AR image based on the location information and vehicle information of the called vehicle is rendered on the called vehicle so as to be displayed on a three-dimensional map; and a processor. The processor is implemented to: in response to a request, convert the three-dimensional map into a three-dimensional surrounding area map based on location information of a passenger; and on the basis of an attribute on difficulty of boarding and alighting, display AR graphic objects at related locations where boarding and alighting are possible on the three-dimensional surrounding area map. Accordingly, by using AR and MR technologies, locations suitable for boarding and alighting can be accurately informed, and a changing travel path can be intuitively recognized.

## Description

### Technical Field

The present disclosure relates to a method of and a system for providing a service for requesting a ride-hailing vehicle, and an AR service-providing apparatus for the method and the system. More particularly, the present disclosure relates to a method of and a system for providing a service for requesting a ride-hailing vehicle, and an AR service-providing apparatus operating in conjunction with the method and the system, the method, the system, and the AR service-providing apparatus being capable of providing services for requesting a ride-hailing vehicle, performing authentication, and designating a location.

### Background Art

A vehicle is an apparatus that moves in a user-desired direction when boarded by a user. A typical example of a vehicle is an automobile.

To provide convenience to a user of a vehicle, there is a trend toward equipping the vehicle with various sensors and electronic devices. Particularly, to enhance user convenience, extensive research has been conducted on Advanced Driver Assistance Systems (ADAS). Moreover, research directed to autonomous vehicles has actively progressed.

Recently, active development has been underway in UI/UX and services that assist in vehicle driving by utilizing technologies such as augmented reality (hereinafter referred to as AR), virtual reality (hereinafter referred to as VR), and mixed reality (hereinafter referred to as MR), which is a combination of AR and VR.

Utilization of the mixed reality technology provides the advantage of providing various types of information necessary for vehicle driving based on the real world or providing various interfaces related to vehicle driving within a virtual world (or digital twin) that closely resembles the real world. Additionally, utilization of the mixed reality technology not only provides convenience in vehicle driving but also offers, to a vehicle occupant, a vehicle occupant with a vehicle occupant with information, content, and the like in various fields.

A market that provides transportation services to passengers through autonomous driving of unmanned vehicles, which are defined as unmanned autonomous taxis or robotaxis, has recently grown. For the transportation services that use unmanned vehicles, research on interactions with passengers needs to be conducted in various ways because human drivers are not present in the unmanned vehicles.

Specifically, from the passenger's perspective, considering the features of the unmanned vehicles, many changes are necessary with respect to various interactions and communications with human drivers in the related art during pre-boarding, on-board, and post-boarding journey stages.

For example, in the related art, a passenger specifies a vehicle boarding location. Subsequently, when a ride-hailing vehicle approaches and stops at the designated vehicle boarding location, the passenger visually checks the license plate number or the vehicle brand name with the naked eye, thereby determining whether to board the ride-hailing vehicle. In addition, after boarding, the passenger can easily identify whether the ride-hailing vehicle is the correct vehicle through a brief conversation with the human driver.

However, in the unmanned vehicle, even when the passenger boards the ride-hailing vehicle after checking the license plate number and the vehicle brand name, there is a need for an additional authentication process to identify whether the ride-hailing vehicle is the correct vehicle requested by the passenger. In addition, the passenger's anxiety is further increased with respect to whether the unmanned vehicle will safely move to the destination preset by the passenger.

In addition, for example, in a case where the ride-hailing vehicle has difficulty in approaching the designated vehicle location due to traffic congestion in the vicinity of the designated vehicle location, such as airports, it is difficult for the passenger to readily change the designated vehicle location with the naked eye and with possible gesture-based interactions.

### Disclosure of Invention

### Technical Problem

Objects of the present disclosure are to address the above-mentioned problems and other related problems.

One object of some embodiments of the present disclosure is to provide a method of and a system for providing a service for requesting a ride-hailing vehicle, and an AR service-providing apparatus operating in conjunction with the method and the system, the method, the system, and the AR service-providing apparatus being capable of adjusting a designated location through mutual recognition and interaction between a passenger and an unmanned vehicle using AR and MR technologies when the unmanned vehicle requested by the passenger is within a predetermined distance from the designated location.

Another object of some embodiments of the present disclosure is to provide a method of and a system for providing a service for requesting a ride-hailing vehicle, and an AR service-providing apparatus operating in conjunction with the method and the system, the method, the system, and the AR service-providing apparatus being capable of not only enabling a passenger to accurately recognize a ride-hailing vehicle requested by the passenger, but also enabling the ride-hailing vehicle to accurately recognize the passenger, thereby performing automatic authentication and providing an accurate vehicle boarding service.

A further object of some embodiments of the present disclosure is to provide a method of and a system for providing a service for requesting a ride-hailing vehicle, and an AR service-providing apparatus operating in conjunction with the method and the system, the method, the system, and the AR service-providing apparatus being capable of providing a location suitable for vehicle boarding and alighting and designating a detailed location using AR and MR technologies when a vehicle boarding place or a vehicle boarding place agreed between a passenger and the ride-hailing vehicle is not suitable for a vehicle boarding and alighting location.

Another object of some embodiments of the present disclosure is to provide a method of and a system for providing a service for requesting a ride-hailing vehicle, and an AR service-providing apparatus operating in conjunction with the method and the system, the method, the system, and the AR service-providing apparatus being capable of enabling an unmanned vehicle to interact with a second passenger at a waypoint using AR and MR technologies in such a manner that the unmanned vehicle can recognize an accurate location of the waypoint designated by a first passenger in a case where the first passenger designates the waypoint.

### Solution to Problem

In order to accomplish the above-mentioned objects, a system for providing a service for requesting a ride-hailing vehicle, according to an embodiment, includes an AR service-providing apparatus and a service platform operating in conjunction with the AR service-providing apparatus.

According to one aspect of the present disclosure, there is provided an AR service-providing apparatus including: a communication unit that acquires location information of a ride-hailing vehicle; a display on which a three-dimensional map, resulting from rendering an AR image that is based on vehicle information of the ride-hailing vehicle and the location information thereof onto the ride-hailing vehicle, is displayed; and a processor that, in response to a request, converts the three-dimensional map into a three neighboring-region map that is based on location information of a passenger, and displays an AR graphic object at a vehicle boarding- and alighting-allowed location on the three-dimensional neighboring-region map, based on vehicle boarding- and alighting-difficulty attributes.

In an embodiment, in the AR service-providing apparatus, the AR graphic object may include a first AR graphic object representing the vehicle boarding- and -alighting-allowed location and a second AR graphic object representing a vehicle boarding- and alighting-prohibited location, the first AR graphic object and the second AR graphic object being displayed on the three-dimensional neighboring-region map.

In an embodiment, in the AR service-providing apparatus, when a selection input is applied to the AR graphic object, the processor may cause a corresponding real street view image to be rendered based on the three-dimensional neighboring-region map.

In an embodiment, in the AR service-providing apparatus, the vehicle boarding- and alighting-difficulty attributes may include one of the following: road information, building information, or terrain information on the 3-dimensional neighboring-region map, and the processor may cause an AR graphic object representing a recommended vehicle boarding and alighting location to be rendered, based on the vehicle boarding- and alighting-difficulty attributes and the location information of the passenger.

In an embodiment, in the AR service-providing apparatus, when the ride-hailing vehicle on which the AR image is rendered enters a vehicle boarding-allowed section, the processor may request the ride-hailing vehicle, through an external camera of the ride-hailing vehicle, to check the surrounding situation that is based on the location information of the passenger, and, in response to the request, the processor causes the AR graphic object representing the recommended vehicle alighting location to be rendered, by taking into consideration the vehicle boarding- and alighting-difficulty level.

In an embodiment, in the AR service-providing apparatus, the processor may change a vehicle boarding and alighting location on the basis of a selection input applied to the AR graphic object and may transmit information about the changed vehicle boarding and alighting location in such a manner that the ride-hailing vehicle performs an operation corresponding to the changed vehicle boarding and alighting location. The display may display, on the three-dimensional map, AR path information for providing guidance on the changed vehicle boarding and alighting location.

In an embodiment, in the AR service-providing apparatus, the processor may cause a plurality of AR images for designating a vehicle boarding and alighting direction onto a structure included in the real street view image, may determine a direction of the structure, the direction corresponding to an AR image selected from among the plurality of AR images, as a direction pointing toward a vehicle boarding and alighting location, and may transmit information about the vehicle boarding and alighting location in the determined direction of the structure to the ride-hailing vehicle.

In an embodiment, in the AR service-providing apparatus, the request may include a waypoint addition request, the display may display a three-dimensional waypoint map on the basis of location information of a second passenger, the location information being related to the waypoint addition request, and
the processor may cause a plurality of AR images for designating a direction pointing toward a waypoint location on a structure included in the three-dimensional waypoint map to be rendered.

The processor may determine, as the direction pointing toward the waypoint location, a direction of a structure corresponding to an AR image selected from among the plurality of AR images, and may transmit GPS coordinate information of the waypoint location to the ride-hailing vehicle.

In an embodiment, in the AR service-providing apparatus, the processor may generate a thumbnail image on the basis of an ID of the structure related to the waypoint location, may transmit information about the generated thumbnail image to the ride-hailing vehicle and may the ride-hailing vehicle to recognize a street view of a structure corresponding to the thumbnail image on the basis of the transmitted GPS coordinate information.

According to another aspect of the present disclosure, there is provided a method of providing a service for requesting a ride-hailing vehicle, the method including: acquiring location information of the ride-hailing vehicle; rendering an AR image that is based on the location information and vehicle information of the ride-hailing vehicle onto the ride-hailing vehicle and displaying the rendered AR image on a three-dimensional map; converting, in response to a request, the three-dimensional map into a three-dimensional neighboring-region map that is based on location information of a passenger; and displaying an AR graphic object at a vehicle boarding- and alighting-allowed location on the three-dimensional neighboring-region map, based on vehicle boarding- and alighting-difficulty attributes.

### Advantageous Effects of Invention

The effects of a method of and a system for providing a service for requesting a ride-hailing vehicle, and an AR service-providing apparatus for the method and the system, according to the present disclosure, are described as follows.

The method of and the system for providing a service for requesting a ride-hailing vehicle, and the AR service-providing apparatus for the method and the system, according to embodiments of the present disclosure, can achieve a natural remote interaction between an unmanned vehicle and a passenger before boarding the unmanned vehicle and enables mutual recognition between the unmanned vehicle and the passenger, thereby enhancing the convenience of performing authentication for boarding the unmanned vehicle and changing a vehicle boarding and alighting location.

In addition, according to embodiments of the present disclosure, not only can the passenger accurately identify a ride-hailing vehicle requested by the passenger, but also the ride-hailing vehicle can also specify and authenticate the passenger in advance through a thumbnail selected by the passenger before boarding the ride-hailing vehicle. Accordingly, interaction and authentication can be smoothly performed, and the ride-hailing vehicle can provide high-quality services such as accurately guiding the passenger to board the ride-hailing vehicle.

In addition, according to embodiments of the present disclosure, in a case where a vehicle boarding place agreed between the passenger and the ride-hailing vehicle is not suitable for a vehicle boarding and alighting location, a location suitable for vehicle boarding and alighting can be accurately provided, and a changed movement path can be intuitively recognized.

In addition, according to embodiments of the present disclosure, even in a case where a first passenger designates a waypoint, a waypoint location can still be provided by a second passenger. Accordingly, even in a station in which the first passenger does not know the second passenger, ride sharing can be naturally achieved using AR and MR technologies.

### Brief Description of Drawings

FIG. 1 is a view illustrating a vehicle associated with an embodiment of the present disclosure.
FIG. 2 is a set of views illustrating the vehicle associated with the embodiment of the present disclosure when viewed from various angles.
FIGS. 3 and 4 are views each illustrating the interior of the vehicle associated with the embodiment of the present disclosure.
FIGS. 5 and 6 are views that are referenced to describe various objects related to driving of the vehicle associated with the embodiment of the present disclosure.
FIG. 7 is a block diagram that is referenced to describe the vehicle associated with the embodiment of the present disclosure, and an AR service-providing apparatus.
FIG. 8 is a diagram illustrating an exemplary detailed configuration of a system for providing a service for requesting a ride-hailing vehicle, the service being associated with an embodiment of the present disclosure, and also illustrating an exemplary detailed configuration of the AR service-providing apparatus.
FIGS. 9A and 9B are views that are referenced to describe distance conditions related to a ride-hailing vehicle allocation request associated with an embodiment of the present disclosure.
FIGS. 10A, 10B, 10C, 10D and 10E are views illustrating examples, respectively, in which the location and driving state of the ride-hailing vehicle associated with embodiments of the present disclosure are displayed in the form of an MR map view, thereby guiding a passenger to board the ride-hailing vehicle.
FIG. 11 is an exemplary flowchart that is referenced to describe a method of determining and authenticating the passenger who requests the ride-hailing vehicle using a thumbnail associated with an embodiment of the present disclosure.
FIGS. 12 and 13 are views that are referenced to describe a situation in which the vehicle associated with the embodiment of the present disclosure generates and provides thumbnails for candidate passengers.
FIG. 14 is a view that is referenced to describe a situation in which the AR service-providing apparatus associated with an embodiment of the present disclosure selects the passenger who requests the ride-hailing vehicle using a thumbnail.
FIG. 15 is an exemplary flowchart that is referenced to describe a method of generating a thumbnail based on prior information of the passenger who requests the ride-hailing vehicle associated with an embodiment of the present disclosure.
FIG. 16 is an exemplary flowchart that is referenced to describe a method of authenticating the passenger who requests the ride-hailing vehicle based on the features of the selected thumbnail associated with an embodiment of the present disclosure.
FIG. 17 is an exemplary flowchart that is referenced to describe a method of providing guidance on, and selecting, a vehicle boarding location using three-dimensional map information associated with an embodiment of the present disclosure.
FIGS. 18 and 19 are views illustrating examples, respectively, in which a vehicle boarding location and a vehicle alighting location are recommended on the basis of vehicle boarding and alighting difficult attributes of the ride-hailing vehicle.
FIG. 20 is a view illustrating a method of selecting a vehicle alighting direction using a highlighted structure on a three-dimensional map associated with an embodiment of the present disclosure.
FIG. 21 is a view illustrating a method of changing a vehicle path using the three-dimensional map information associated with the embodiment of the present disclosure.
FIGS. 22 and 23 are a flowchart and an exemplary view, respectively, that are referenced to describe a method in which location information of the waypoint is provided using the three-dimensional map information associated with the embodiment of the present disclosure.
FIG. 24 is a view that is referenced to describe a situation in which ride-sharing applicants are displayed using the three-dimensional map information associated with the embodiments of the present disclosure.

### Mode for the Invention

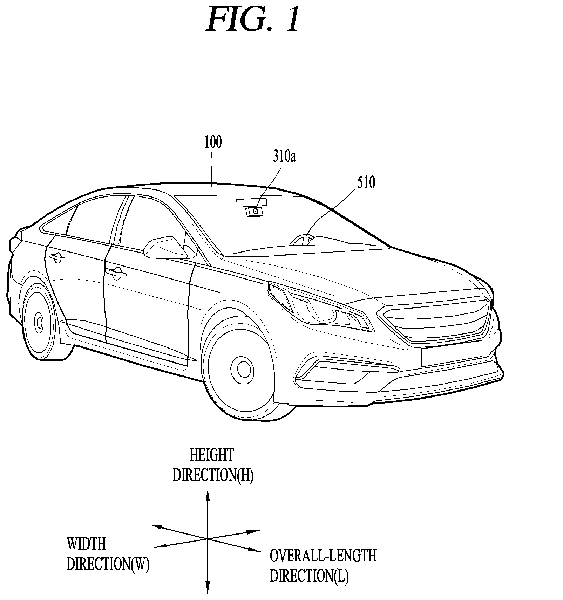

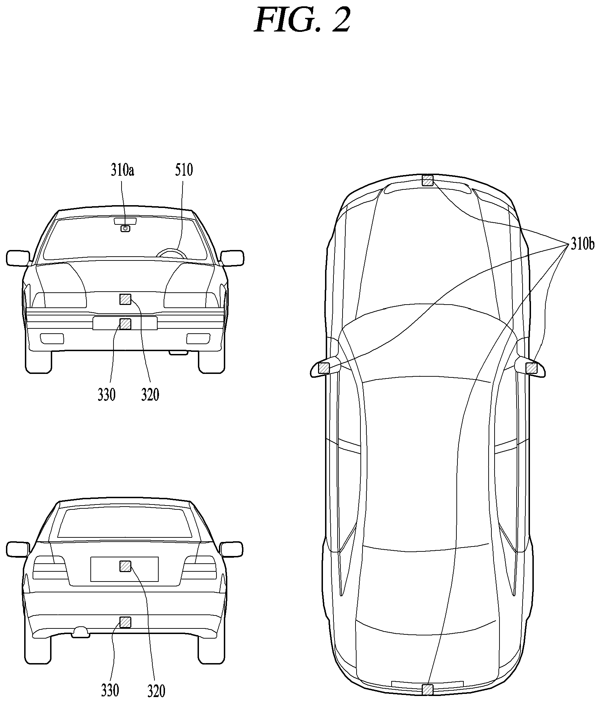

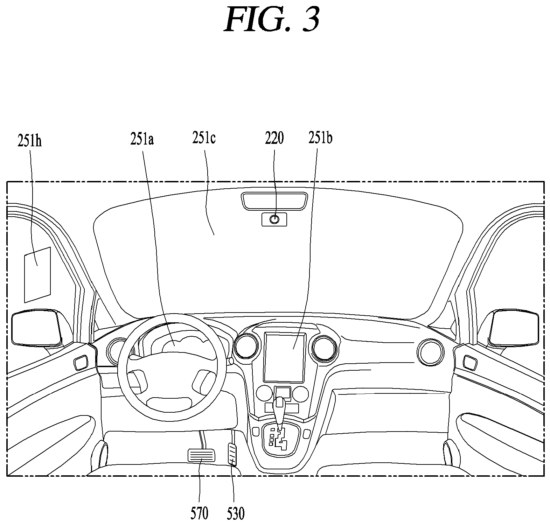

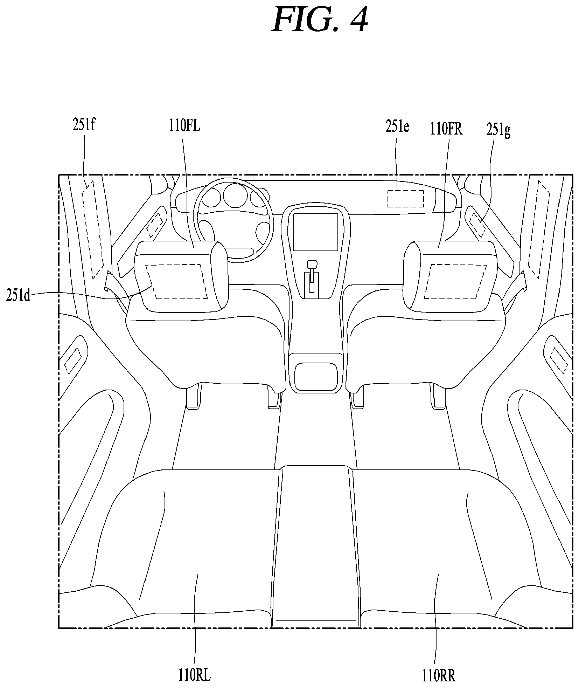

FIGS. 1 and 2 are views each illustrating the exterior of a vehicle associated with an embodiment of the present disclosure. FIGS. 3 and 4 are views each illustrating the interior of the vehicle associated with the embodiment of the present disclosure.

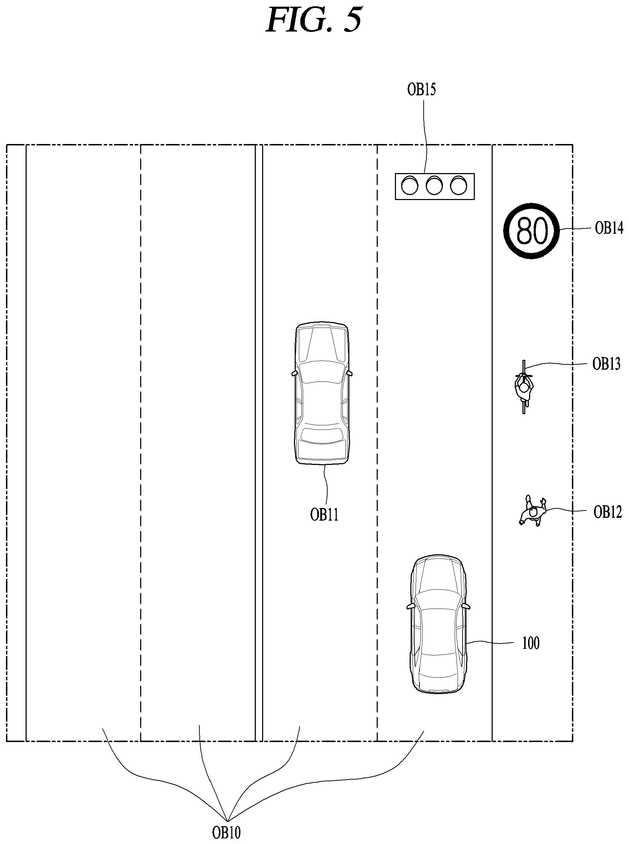

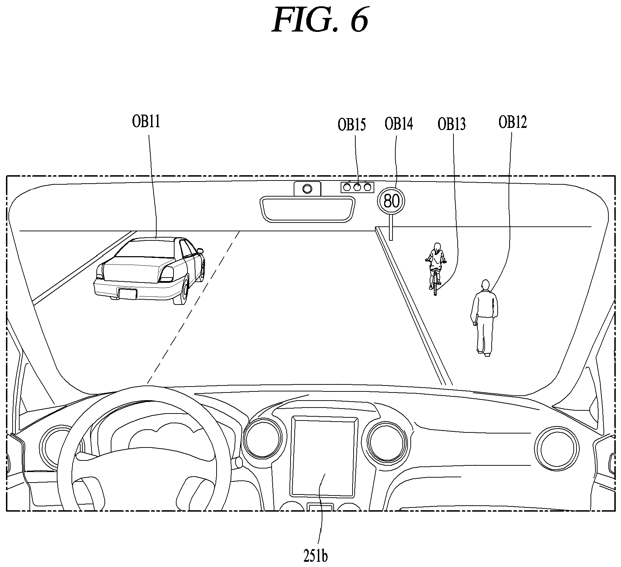

FIGS. 5 and 6 are views each illustrating various objects related to driving of the vehicle associated with the embodiment of the present disclosure.

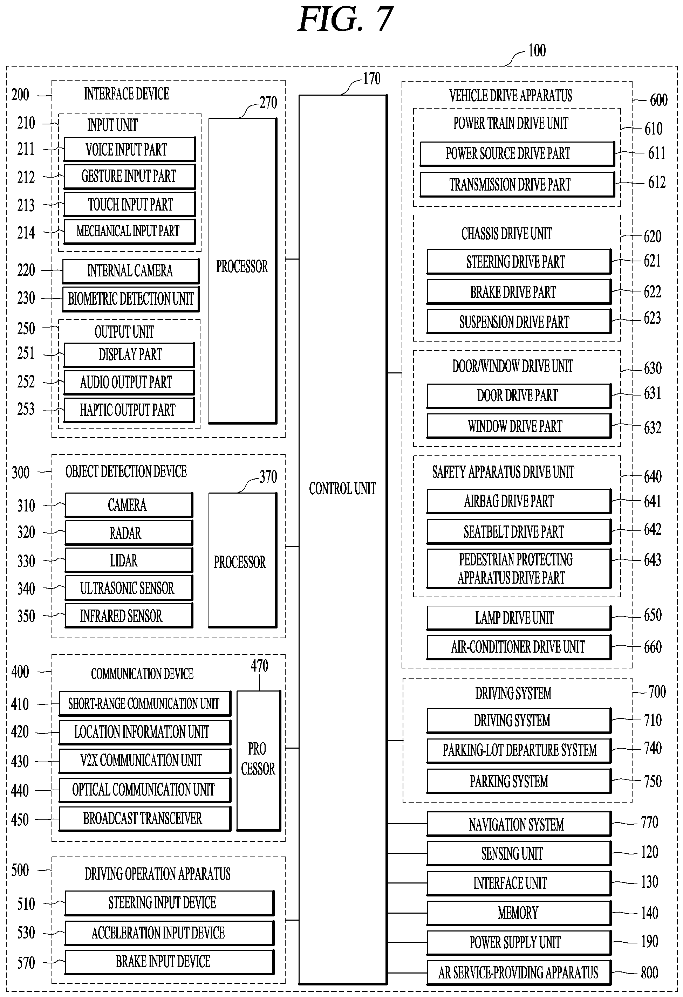

FIG. 7 is a block diagram that is referenced to describe the vehicle associated with the embodiment of the present disclosure. FIG. 7 is a block diagram that is referenced to describe the vehicle associated with the embodiment of the present disclosure.

With reference to FIGS. 1 to 7, a vehicle 100 may include wheels that rotate by a power source and a steering input apparatus 510 for adjusting the driving direction of the vehicle 100.

The vehicle 100 may be an autonomous driving vehicle. The vehicle 100 may switch to an autonomous driving mode or a manual mode in response to input from the user. For example, the vehicle 100 may switch from the manual mode to the autonomous driving mode or from the autonomous driving mode to the manual mode in response to the input received from the user through a user interface device 200 (hereinafter referred to as a 'user terminal').

The vehicle 100 may switch to the autonomous driving mode or the manual mode on the basis of driving situation information. The driving situation information may be generated on the basis of object information provided by an object detection device 300. For example, the vehicle 100 may switch from the manual mode to the autonomous driving mode or from the autonomous driving mode to the manual mode on the basis of the driving situation information generated by the object detection device 300. For example, the vehicle 100 may switch from the manual mode to the autonomous driving mode or from the autonomous driving mode to the manual mode on the basis of the driving situation information received through a communication device 400.

The vehicle 100 may switch from the manual mode into the autonomous driving mode or from the autonomous driving mode to the manual mode on the basis of information, data, signals, all of which are provided by an external device.

In a case where the vehicle 100, which is an autonomous driving vehicle, may be driven in the autonomous driving mode, the vehicle 100 may be driven through the use of an operational system 700. For example, the autonomous driving vehicle 100 may be driven on the basis of information, data, and signals, all of which are generated by a driving system 710, a parking-lot departure system 740, and a parking system 750.

In a case where the vehicle 100, which is an autonomous driving vehicle, is driven in the manual mode, the vehicle 100 may receive a user input for driving through a driving operation apparatus 500. The vehicle 100 may be driven in response to the input received from the user through the driving operation apparatus 500.

The overall length refers to the length from the front end to the rear end of the vehicle 100, the width refers to the width of the vehicle 100, and the height refers to the length from the bottom of the wheel to the roof. In the following description, an overall-length direction L may refer to a direction which serves as a reference for measuring the overall length of the vehicle 100, a width direction W may refer to a direction that serves as a reference for measuring the width of the vehicle 100, and a height direction H may refer to a direction that serves as a reference for measuring the height of the vehicle 100.

As illustrated in FIG. 7, the vehicle 100 may include the user interface device (hereinafter referred to as the "user terminal") 200, the object detection device 300, the communication device 400, the driving operation apparatus 500, a vehicle drive apparatus 600, the operational system 700, a navigation system 770, a sensing unit 120, a vehicular interface unit 130, a memory 140, a control unit 170 and a power supply unit 190.

According to an embodiment, the vehicle 100 may further include one or more constituent elements in addition to the constituent elements described in the present specification or may omit one or more of the described constituent elements.

The user interface device 200 is a device for communication between the vehicle 100 and the user. The user interface device 200 may receive a user input and may provide information, generated by the vehicle 100, to the user. The vehicle 100 may provide a user interface (UI) or user experience (UX) through the user interface device (hereinafter referred to as the 'user terminal') 200.

The user interface device 200 may include an input unit 210, an internal camera 220, a biometric detection unit 230, an output unit 250, and a processor 270. According to an embodiment, the user interface device 200 may further include one or more constituent elements in addition to the constituent elements described in the present specification or may omit one or more of the described constituent elements.

The input unit 210 serves to receive information as input from the user. The processor 270 may analyze data collected through the input unit 210 and may convert the data into a control command of the user.

The input unit 210 may be arranged within the vehicle 100. For example, the input unit 210 may be arranged in one region of the steering wheel, one region of the instrument panel, one region of the seat, one region of each pillar, one region of the door, one region of the center console, one region of the headlining, one region of the sun visor, one region of the windshield, one region of the window, or one region of a similar location.

The input unit 210 may include a voice input part 211, a gesture input part 212, a touch input part 213, and a mechanical input part 214.

The voice input part 211 may convert a user's voice input into an electrical signal. The electrical signal, resulting from the conversion, may be provided to the processor 270 or the control unit 170. The voice input part 211 may include at least one microphone.

The gesture input part 212 may convert a user's gesture input into an electrical signal. The electrical signal, resulting from the conversion, may be provided to the processor 270 or the control unit 170.

The gesture input part 212 may include at least one of the following: an infrared sensor or an image sensor, each of which serves to detect the user's gesture input. According to an embodiment, the gesture input part 212 may detect a user's three-dimensional (3D) gesture input. To this end, the gesture input part 212 may include a plurality of light-emitting units that emit a plurality of infrared rays, or a plurality of image sensors.

The gesture input part 212 may detect the user's 3D gesture input through a time-of-flight (TOF) method, a structured light method, or a disparity method.

The touch input part 213 may convert the user's touch input into an electrical signal. The electrical signal, resulting from the conversion, may be provided to the processor 270 or the control unit 170.

The touch input part 213 may include a touch sensor for detecting the user's touch input. According to an embodiment, the touch input part 213 may be integrally formed with a display part 251, thereby forming a touch screen. This touch screen may provide both an input interface and an output interface between the vehicle 100 and the user.

The mechanical input part 214 may include at least one of the following: a button, a dome switch, a jog wheel, or a jog switch. An electrical signal generated by the mechanical input part 214 may be provided to the processor 270 or the control unit 170. The mechanical input part 214 may be arranged on a steering wheel, a center fascia, a center console, a cockpit module, a door, and equivalents thereof.

The internal camera 220 may acquire an image of the interior of the vehicle 100. The processor 270 may detect the user's state on the basis of the image of the interior of the vehicle 100. The processor 270 may acquire the user's gaze information from the image of the interior of the vehicle 100. The processor 270 may detect the user's gesture from the image of the interior of the vehicle 100.

The biometric detection unit 230 may acquire the user's biometric information. The biometric detection unit 230 may include a sensor for acquiring the user's biometric information and may acquire the user's fingerprint information, heart rate information, and equivalents thereof using the sensor. The biometric information may be used for user authentication.

The output unit 250 may generate outputs associated with visual output, audio output, haptic output, and equivalents thereof. The output unit 250 may include at least one of the following: the display part 251, an audio output part 252, or a haptic output part 253.

The display part 251 may display graphic objects that correspond to various pieces of information. The display part 251 may include at least one of the following: a liquid crystal display (LCD), a thin-film transistor-LCD (TFT LCD), an organic light-emitting diode (OLED), a flexible display, a three-dimensional (3D) display, or an E-Ink display.

The display part 251 may be configured to have a layered structure or an integrated structure with the touch input part 213, thereby forming a touch screen.

The display part 251 may be configured as a head-up display (HUD). In a case where the display part 251 may be configured as the HUD, the display part 251 may be equipped with a projection module and thus may output information through an image that is projected onto the window shield or the window.

The display part 251 may be a transparent display. The transparent display may be attached to the windshield or the window. The transparent display may have a predetermined degree of transparency and may output a predetermined screen thereon. The transparent display may include at least one of the following: a thin-film electroluminescent (TFEL), a transparent organic light-emitting diode (OLED), a transparent liquid crystal display (LCD), a transmissive transparent display, or a transparent light-emitting diode (LED) display. The transparent display may have adjustable transparency.

The user interface device 200 may include a plurality of display parts, for example, display parts 251a to 251g.

The display part 251 may be arranged in one region of the steering wheel, one region 521a, 251b, or 251e of the instrument panel, one region 251d of the seat, one region 251f of each pillar, one region 251g of the door, one region of the center console, one region of the headlining, or one region of the sun visor, or may be formed in one region 251c of the windshield, or one region of the window.

The audio output part 252 converts an electrical signal, provided from the processor 270 or the control unit 170, into an audio signal and outputs the audio signal. To this end, the audio output part 252 may include at least one speaker.

The haptic output part 253 generates a tactile output. For example, the haptic output part 253 may operate to vibrate the steering wheel, the safety belt, and the seats 110FL, 110FR, 110RL, and 110RR, thereby enabling the user to perceive the vibration output.

The processor (hereinafter referred to as a 'control unit') 270 may control the overall operation of each unit of the user interface device 200. According to an embodiment, the user interface device 200 may include a plurality of processors 270 or may be configured without including the processor 270.

In a case where the processor 270 is not included in the user interface device 200, the user interface device 200 may operate under the control of a processor of another apparatus within the vehicle 100 or under the control of the control unit 170.

The user interface device 200 may be referred to as a vehicular display device. The user interface device 200 may operate under the control of the control unit 170.

The object detection device 300 is a device for detecting an object located outside the vehicle 100. This object may be an external entity associated with the driving of the vehicle 100. With reference to FIGS. 5 and 6, examples of an object O may include a traffic lane OB10, a different vehicle OB11, a pedestrian OB12, a two-wheeled vehicle OB13, traffic signals OB14 and OB15, ambient light, a road, a structure, a speed bump, a terrain feature, an animal, and the like.

The lane OB10 may be a driving lane, a lane adjacent to the driving lane, or a lane along which another vehicle in the opposite direction drives. The lane OB10 may conceptually include the left and right boundary lines forming a lane.

The different vehicle OB11 may be a vehicle that drives in the vicinity of the vehicle 100. The different vehicle OB11 may be a vehicle located within a predetermined distance from the vehicle 100. For example, the different vehicle OB11 may be a vehicle that drives ahead of or behind the vehicle 100.

The pedestrian OB12 may be a person located in the vicinity of the vehicle 100. The pedestrian OB12 may be a person located within a predetermined distance from the vehicle 100. For example, the pedestrian OB12 may be a person located on a sidewalk or roadway.

The two-wheeled vehicle OB12 may be a person-carrying vehicle that is located in the vicinity of the vehicle 100 and moves on two wheels. The two-wheeled vehicle OB12 may be a person-carrying vehicle that is located within a predetermined distance from the vehicle 100 and has two wheels. For example, the two-wheeled vehicle OB13 may be a motorcycle or a bicycle that is located on a sidewalk or roadway.

Examples of the traffic signal may include a traffic light OB15, a traffic sign OB14, and a pattern or text drawn on a road surface.

The ambient light may be light generated from a lamp provided on another vehicle. The ambient light may be light generated from a street lamp. The ambient light may be solar light.

Features of this road may include a road surface, a curve, an upward slope, a downward slope, and the like.

This structure may be an object that is located in the vicinity of a road and fixed on the ground. Examples of such a structure may include a streetlamp, a roadside tree, a building, an electric pole, a traffic light, a bridge, and the like.

Examples of this terrain feature may include a mountain, a hill, and the like.

These objects may be classified into movable objects and stationary objects. Examples of such movable objects may conceptually include another vehicle and a pedestrian. Examples of such stationary objects may conceptually include a traffic signal, a road, and a structure.

The object detection device 300 may include a camera 310, a radar 320, a LiDAR 330, an ultrasonic sensor 340, an infrared sensor 350, and a processor 370.

According to an embodiment, the object detection device 300 may further include one or more constituent elements in addition to the constituent elements described in the present specification or may omit one or more of the described constituent elements.

The camera 310 may be located in an appropriate portion of the exterior of the vehicle to acquire an image of the surroundings of the vehicle 100. The camera 310 may be a mono camera, a stereo camera 310a, an Around View Monitoring (AVM) camera 310b, or a 360-degree camera.

For example, the camera 310 may be arranged adjacent to a front windshield within the vehicle 100 to acquire an image of the surroundings in front of the vehicle 100. Alternatively, the camera 310 may be arranged in the vicinity of the front bumper or the radiator grill.

For example, the camera 310 may be arranged adjacent to a rear glass pane within the vehicle 100 to acquire an image of the surroundings behind the vehicle 100. Alternatively, the camera 310 may be arranged adjacent to the rear bumper, the trunk, or the tailgate.

For example, the camera 310 may be arranged adjacent to at least one of the side windows within the vehicle 100 to acquire an image of the surroundings alongside the vehicle 100. Alternatively, the camera 310 may be arranged in the vicinity of the side mirror, the fender, or the door.

The camera 310 may provide an acquired image to the processor 370.

The radar 320 may include an electromagnetic wave transmission unit and an electromagnetic wave reception unit. The radar 320 may be configured based on a pulse radar method or a continuous wave radar method, in accordance with the principle of emitting a radio wave. The radar 320 may be configured based on a Frequency Modulated Continuous Wave (FMCW) method or a Frequency Shift Keying (FSK) method, each of which is among continuous wave radar methods determined according to the signal waveform.

The radar 320 may detect an object based on a time-of-flight (TOF) technique or a phase-shift technique through the use of electromagnetic waves and may determine the location of the object, the distance to the object, and the relative speed with respect to the object.

The radar 320 may be arranged in an appropriate position on the exterior of the vehicle 100 to detect an object that is located in front of, behind, or alongside the vehicle 100.

The LiDAR 330 may include a laser transmission unit and a laser reception unit. The LiDAR 330 may be configured based on the time-of-flight (TOF) technique or the phase-shift technique.

The LiDAR 330 may be configured as a drive-type or non-drive-type LiDAR.

In a case where the LiDAR 330 may be configured as a drive-type LiDAR, the LiDAR 330 may be rotated by a motor and may detect an object in the vicinity of the vehicle 100.

In a case where the LiDAR 330 may be configured as a non-drive-type LiDAR, the LiDAR 330 may detect, through light steering, an object located within a predetermined range of the vehicle 100. The vehicle 100 may include a plurality of non-drive-type LiDAR's 330.

The LiDAR 330 may detect an object based on the time-of-flight (TOF) technique or the phase-shift technique through the use of laser light and may determine the location of the object, the distance to the object, and the relative speed with respect to the object.

The radar 330 may be arranged in an appropriate position on the exterior of the vehicle 100 to detect an object that is located in front of, behind, or alongside the vehicle 100.

The ultrasonic sensor 340 may include an ultrasonic wave transmission unit and an ultrasonic wave reception unit. The ultrasonic sensor 340 may detect an object through the use of ultrasonic waves and may determine the location of the object, the distance to the object, and the relative speed with respect to the object.

The ultrasonic sensor 340 may be arranged in an appropriate position on the exterior of the vehicle 100 to detect an object located in front of, behind, or alongside the vehicle 100.

The infrared sensor 350 may include an infrared light transmission unit and an infrared light reception unit. The infrared sensor 340 may detect an object through the use of infrared light and may determine the location of the detected object, the distance to the detected object, and the relative speed with respect to the detected object.

The infrared sensor 350 may be arranged in an appropriate position on the exterior of the vehicle 100 to detect an object located in front of, behind, or alongside the vehicle 100.

The processor 370 may control the overall operation of each unit of the object detection device 300.

The processor 370 may detect and track an object on the basis of an acquired image. The processor 370 may perform operations, such as calculation of the distance to the object and calculation of the relative speed with respect to the object, through the use of an image processing algorithm.

The processor 370 may detect and track an object through the use of reflected electromagnetic waves, resulting from the reflection of emitted electromagnetic waves by the object. The processor 370 may perform operations, such as calculation of the distance to the object and calculation of the relative speed with respect to the object, through the use of electromagnetic waves.

The processor 370 may detect and track an object through the use of reflected laser beams, resulting from the reflection of emitted lasers by the object. The processor 370 may perform operations, such as calculation of the distance to the object and calculation of the relative speed with respect to the object, through the use of laser beams.

The processor 370 may detect and track an object through the use of reflected ultrasonic waves, resulting from the reflection of emitted ultrasonic waves by the object. The processor 370 may perform operations, such as calculation of the distance to the object and calculation of the relative speed with respect to the object, through the use of ultrasonic waves.

The processor 370 may detect and track an object through the use of reflected infrared light, resulting from the reflection of emitted infrared light by the object. The processor 370 may perform operations, such as calculation of the distance to the object and calculation of the relative speed with respect to the object, through the use of infrared light.

According to an embodiment, the object detection device 300 may include a plurality of processors 370 or may be configured without including the processor 370. The camera 310, the radar 320, the LiDAR 330, the ultrasonic sensor 340, and the infrared sensor 350 may each include a respective processor for individual operation.

In a case where the processor 370 is not included in the object detection device 300, the object detection device 300 may operate under the control of a processor of an apparatus within the vehicle 100 or under the control of the control unit 170.

The object detection device 300 may operate under the control of the control unit 170.

The communication device 400 is a device for performing communication with an external device. The external device here may be another vehicle, a mobile terminal, or a server.

To perform communication, the communication device 400 may include a transmission antenna, a reception antenna, and at least one of the following: a radio frequency (RF) circuit or an RF device, each of which is capable of implementing various communication protocols.

The communication device 400 may include a short-range communication unit 410, a location information unit 420, a V2X communication unit 430, an optical communication unit 440, a broadcast transceiver 450, and a processor 470.

According to an embodiment, the communication device 400 may further include one or more constituent elements in addition to the constituent elements in the present specification or may omit one or more of the described constituent elements.

The short-range communication unit 410 is a unit for short-range communication. The short-range communication unit 410 may support short-range communication using at least one of the following technologies: Bluetooth^{™}, Radio Frequency IDentification (RFID), Infrared Data Association (IrDA), Ultra-Wide Band (UWB), Zig Bee, Near Field Communication (NFC), Wireless-Fidelity (Wi-Fi), Wi-Fi Direct, or Wireless Universal Serial Bus (USB).

The short-range communication unit 410 may form short-range wireless area networks and may perform short-range communication between the vehicle 100 and at least one external device.

The location information unit 420 is a unit for acquiring location information of the vehicle 100. For example, the location information unit 420 may include a Global Positioning System (GPS) module or a Differential Global Positioning System (DGPS) module.

The V2X communication unit 430 is a unit for performing wireless communication with a server (Vehicle to Infrastructure (V2I)), with another vehicle (Vehicle to Vehicle (V2V)), or with a pedestrian (Vehicle to Pedestrian (V2P)). The V2X communication unit 430 may include an RF circuit capable of implementing protocols for communication with an infrastructure (V2I), communication between vehicles (V2V), and communication with a pedestrian (V2P).

The optical communication unit 440 is a unit for performing communication with an external device through the use of light. The optical communication unit 440 may include an optical transmission part for converting an electrical signal into an optical signal and transmitting the optical signal to the outside, and an optical reception part for converting the received optical signal back into an electrical signal.

According to an embodiment, the optical transmission part may be integrally formed with a lamp included in the vehicle 100.

The broadcast transceiver 450 is a unit for receiving a broadcast signal from an external broadcast management server or transmitting a broadcast signal to the broadcast management server over a broadcast channel. The broadcast channel may refer to a satellite channel, a terrestrial channel, or both. The broadcast signal may include a TV broadcast signal, a radio broadcast signal, and a data broadcast signal.

The processor 470 may control the overall operation of each unit of the communication device 400.

According to an embodiment, the communication device 400 may include a plurality of processors 470 or may be configured without including the processor 470.

In a case where the processor 470 is not included in the communication device 400, the communication device 400 may operate under the control of a processor of another device within the vehicle 100 or under the control of the control unit 170.

The communication device 400, together with the user interface device 200, may constitute a vehicular display device. In this case, the vehicular display device may be referred to as a telematics device or an Audio Video Navigation (AVN) device.

The communication device 400 may operate under the control of the control unit 170.

The driving operation apparatus 500 is an apparatus for receiving a user input for driving.

In the manual mode, the vehicle 100 may be driven on the basis of a signal provided by the driving operation apparatus 500.

The driving operation apparatus 500 may include the steering input device 510, an acceleration input device 530, and a brake input device 570.

The steering input apparatus 510 may receive an input regarding the driving direction of the vehicle 100 from the user. The steering input apparatus 510 is preferably formed in the form of a wheel, thereby enabling a steering input through the rotation of the wheel. According to an embodiment, the steering input apparatus may also be formed in the shape of a touch screen, a touchpad, or a button.

The acceleration input apparatus 530 may receive, from the user, an input for accelerating the vehicle 100. The brake input apparatus 570 may receive, from the user, an input for decelerating the vehicle 100. The acceleration input apparatus 530 and the brake input apparatus 570 are preferably formed in the shape of a pedal. According to an embodiment, the acceleration input apparatus or the brake input apparatus may also be formed in the shape of a touch screen, a touchpad, or a button.

The driving operation apparatus 500 may operate under the control of the control unit 170.

The vehicle drive apparatus 600 is an apparatus that electrically controls driving of various apparatuses within the vehicle 100.

The vehicle drive apparatus 600 may include a power train drive unit 610, a chassis drive unit 620, a door/window drive unit 630, a safety apparatus drive unit 640, a lamp drive unit 650, and an air-conditioner drive unit 660.

According to an embodiment, the vehicle drive apparatus 600 may further include one or more constituent elements in addition to the constituent elements described in the present specification or may omit one or more of the described constituent elements.

The vehicle drive apparatus 600 may include a processor. Units of the vehicle drive apparatus 600 may each include a respective processor for individual operation.

The power train drive unit 610 may control the operation of a power train apparatus.

The power train drive unit 610 may include a power source drive part 611 and a transmission drive part 612.

The power source drive part 611 may execute control of a power source of the vehicle 100.

For example, in a case where the power source of the vehicle 100 is a fossil fuel-based engine, the power source drive part 611 may execute electronic control of the engine. Accordingly, output torque and other parameters of the engine may be controlled. The power source drive part 611 may adjust the engine output torque under the control of the control unit 170.

For example, in a case where the power source of the vehicle 100 is an electric energy-based motor, the power source drive part 611 may execute control of the motor. The power source drive part 611 may adjust the rotational speed, torque, and other parameters of the motor under the control of the control unit 170.

The transmission drive part 612 may execute control of a transmission. The transmission drive gearbox part 612 may adjust the state of the transmission. The transmission drive part 612 may change the state of the transmission to Drive (D), Reverse (R), Neutral (N), or Park (P).

In a case where the power source of the vehicle 100 is an engine, the transmission drive part 612 may adjust the engaged state of a gear in Drive (D).

The chassis drive unit 620 may control the operation of a chassis apparatus. The chassis drive unit 620 may include a steering drive part 621, a brake drive part 622, and a suspension drive part 623.

The steering drive part 621 may execute electronic control of a steering apparatus within the vehicle 100. The steering drive part 621 may change the driving direction of the vehicle 100.

The brake drive part 622 may execute electronic control of a brake apparatus within the vehicle 100. For example, the brake drive part 622 may reduce the speed of the vehicle 100 by controlling the operation of the brakes provided on the wheels.

The brake drive part 622 may individually control each of a plurality of brakes. The brake drive part 622 may control application of braking forces to the plurality of wheels in a different manner.

The suspension drive part 623 may execute electronic control of a suspension apparatus within the vehicle 100. For example, in a case where a road surface is uneven, the suspension drive part 623 may reduce vibration of the vehicle 100 by controlling the suspension apparatus. The suspension drive part 623 may control each of the plurality of suspensions individually.

The door/window drive unit 630 may execute electronic control of a door apparatus or a window apparatus within the vehicle 100.

The door/window drive unit 630 may include a door drive part 631 and a window drive part 632.

The door drive part 631 may execute control of the door apparatus. The door drive part 631 may control opening or closing of a plurality of doors included in the vehicle 100. The door drive part 631 may control opening or closing of the trunk or the tailgate. The door drive part 631 may control opening or closing of the sunroof.

The window drive part 632 may execute electronic control of the window apparatus. The window drive part 632 may control opening or closing of a plurality of windows included in the vehicle 100.

The safety apparatus drive unit 640 may execute electronic control of various safety apparatuses within the vehicle 100.

The safety apparatus drive unit 640 may include an airbag drive part 641, a seat belt drive part 642, and a pedestrian protection apparatus drive part 643.

The airbag drive part 641 may execute electronic control of an airbag apparatus within the vehicle 100. For example, when a risk is detected, the airbag drive part 641 may control an airbag in such a manner that the airbag is deployed.

The seat belt drive part 642 may execute electronic control of a seat belt apparatus within the vehicle 100. For example, when a risk is detected, the seat belt drive part 642 may secure occupants seated in seats 110FL, 110FR, 110RL, and 110RR by tightening respective seat belts.

The pedestrian protection apparatus drive part 643 may execute electronic control of the hood lift and the pedestrian airbag. For example, when a collision with a pedestrian is detected, the pedestrian protection apparatus drive part 643 may control the hood lift and the pedestrian airbag in such a manner that the hood lift and the pedestrian airbag are deployed.

The lamp drive part 650 may execute electronic control of various lamp apparatuses within the vehicle 100.

The air-conditioner drive unit 660 may execute electronic control of an air conditioner within the vehicle 100. For example, when the temperature inside the vehicle 100 is high, the air-conditioner drive unit 660 may control the air conditioner to operate in such a manner as to supply cool air into the vehicle 100.

The vehicle drive apparatus 600 may include a processor. Units of the vehicle drive apparatus 600 may each include a respective processor for individual operation.

The vehicle drive apparatus 600 may operate under the control of the control unit 170.

The operational system 700 is a system that controls various driving functions of the vehicle 100. The operational system 700 may operate in the autonomous driving mode.

The operational system 700 may include the driving system 710, the parking-lot departure system 740, and the parking system 750.

According to an embodiment, the operational system 700 may further include one or more constituent elements in addition to the constituent elements described in the present disclosure or may emit one or more of the described constituent elements.

The operational system 700 may include a processor. Units of the operational system 700 may each include a respective processor for individual operation.

According to an embodiment, in a case where the operational system 700 may be implemented in software, the operational system 700 may also conceptually operate at a lower level than the control unit 170.

According to an embodiment, the operational system 700 may conceptually include at least one of the following: the user interface device 200, the object detection device 300, the communication device 400, the vehicle drive apparatus 600, or the control unit 170.

The driving system 710 may enable the vehicle 100 to be driven.

The driving system 710 may receive navigation information from the navigation system 770, may provide a control signal to the vehicle drive apparatus 600, and may enable the vehicle 100 to be driven. The driving system 710 may receive object information from the object detection device 300, may provide a control signal to the vehicle drive apparatus 600, and may enable the vehicle 100 to be driven. The driving system 710 may receive a signal from an external device through the communication device 400, may provide a control signal to the vehicle drive apparatus 600, and may enable the vehicle 100 to be driven.

The parking-lot departure system 740 may perform a maneuver to guide the vehicle 100 out of a parking lot.

The parking-lot departure system 740 may receive the navigation information from the navigation system 770, may provide a control signal to the vehicle drive apparatus 600, and may perform a maneuver to guide the vehicle 100 out of the parking lot. The parking-lot departure system 740 may receive object information from the object detection device 300, may provide a control signal to the vehicle drive apparatus 600, and may perform a maneuver to guide the vehicle 100 out of the parking lot. The parking-lot departure system 740 may receive a signal from an external device through the communication device 400, may provide a control signal to the vehicle drive apparatus 600, and may perform a maneuver to guide the vehicle 100 out of the parking lot.

The parking system 750 may perform a maneuver to park the vehicle 100.

The parking system 750 may receive the navigation information from the navigation system 770, may provide a control signal to the vehicle drive apparatus 600, and may perform a maneuver to park the vehicle 100. The parking system 750 may receive object information from the object detection device 300, may provide a control signal to the vehicle drive apparatus 600, and may perform a maneuver to park the vehicle 100. The parking system 750 may receive a signal from an external device through the communication device 400, may provide a control signal to the vehicle drive apparatus 600, and may perform a maneuver to park the vehicle 100.

The navigation system 770 may provide the navigation information. The navigation information may include at least one of the following: map information, preset destination information, path information based on the set destination, information about various objects on a path, lane information, or current vehicular location information.

The navigation system 770 may include a memory and a processor. The navigation information may be stored in the memory. The processor may control the operation of the navigation system 770.

According to an embodiment, the navigation system 770 may update previously stored information by receiving information from an external device through the communication device 400.

According to an embodiment, the navigation system 770 may also be classified as a sub-constituent element of the user interface device 200.

The sensing unit 120 may sense the state of the vehicle 100. The sensing unit 120 may include a posture sensor (e.g., a yaw sensor, a roll sensor, a pitch sensor, or a similar sensor), a collision sensor, a wheel sensor, a speed sensor, a tilt sensor, a weight-detection sensor, a heading sensor, a gyro sensor, a position module, a vehicle forward/backward movement sensor, a battery sensor, a fuel sensor, a tire sensor, a steering sensor sensing the turning of a steering wheel, an in-vehicle temperature sensor, an in-vehicle humidity sensor, an ultrasonic sensor, an illumination sensor, an accelerator position sensor, a brake pedal position sensor, and other sensors.

The sensing unit 120 may acquire vehicular posture information, vehicular collision information, vehicular direction information, vehicular location information (GPS information), vehicular angle information, vehicular speed information, vehicular acceleration information, vehicular tilt information, vehicular forward/backward movement information, battery information, fuel information, tire information, vehicular lamp information, in-vehicle temperature information, and in-vehicle humidity information. Furthermore, the sensing unit 120 may acquire signals that result from sensing a steering wheel rotation angle, outside-vehicle illumination, pressure applied to an acceleration pedal, pressure applied to a brake pedal, and equivalents thereof.

The sensing unit 120 may further include an acceleration pedal sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and other sensors.

The vehicular interface unit 130 may serve as an interface for various types of external devices connected to the vehicle 100. For example, the vehicular interface unit 130 may include a port that enables a connection with a mobile terminal and may be connected to the mobile terminal through the port. In this case, the vehicular interface unit 130 may exchange data with the mobile terminal.

The vehicular interface unit 130 may serve as an interface for supplying electrical energy to the connected mobile terminal. In a case where the mobile terminal is electrically connected to the vehicular interface unit 130, the vehicular interface unit 130 may supply electrical energy, supplied from the power supply unit 190, to the mobile terminal under the control of the control unit 170.

The memory 140 is electrically connected to the control unit 170. Basic data for the units, control data for controlling operations of the units, and input and output data may be stored in the memory 140. Examples of the memory 140 may include various hardware storage devices, such as ROM, RAM, EPROM, flash memory, and a hard disk drive. Programs and equivalents thereof for processing or control by the control unit 170 and various data for the overall operation of the vehicle 100 may be stored in the memory 140.

According to an embodiment, the memory 140 may be integrally formed with the control unit 170 or may be configured as a sub-constituent element of the control unit 170.

The control unit 170 may control the overall operation of each unit within the vehicle 100. The control unit 170 may be referred to as an Electronic Control Unit (ECU).

The power supply unit 190 may supply power necessary for the operation of each constituent element under the control of the control unit 170. Specifically, the power supply unit 190 may be supplied with power from the battery within the vehicle 100 or from other sources.

At least one processor and the control unit 170, which are included in the vehicle 100, may be configured based on at least one of the following: application-specific integrated circuits (ASICs), digital signal processors (DSPs), digital signal processing devices (DSPDs), programmable logic devices (PLDs), field-programmable gate arrays (FPGAs), processors, controllers, microcontrollers, microprocessors, or electric units performing other functions.

In embodiments of the present disclosure, a "vehicle" or "ride-hailing vehicle" is assumed to be an unmanned vehicle. Therefore, the above description with reference to FIGS. 1 to 7 may exclude configurations and examples applicable to manned vehicles. In addition, in the present specification, the terms "ride-hailing vehicle" and "vehicle" may be used interchangeably.

In embodiments of the present disclosure, the term "passenger" or "client" has been used to refer to a person or an apparatus (e.g., an AR service-providing apparatus) that requests a ride-hailing vehicle. Therefore, the term "location of a passenger or client" has been used to refer to the current location of the person or apparatus that requests the ride-hailing vehicle. In addition, in the present specification, the terms "'passenger" and "client" may be used in the singular or plural sense.

In addition, as illustrated in FIG. 7, an AR service-providing apparatus 800 according to the present disclosure may be arranged to be mountable as part of a vehicle or may be configured as a terminal device separate from the vehicle.

In the former case, the AR service-providing apparatus 800 may be configured in the form of a display or the like arranged in the vehicle. In this case, the AR service-providing apparatus 800 is described as communicating with, and operating in conjunction with, a terminal carried by a passenger.

In the latter case, the AR service-providing apparatus 800 may be configured in the form of a terminal carried by a passenger. In this case, the AR service-providing apparatus 800 is described as communicating with, and operating in conjunction with, the vehicle 100.

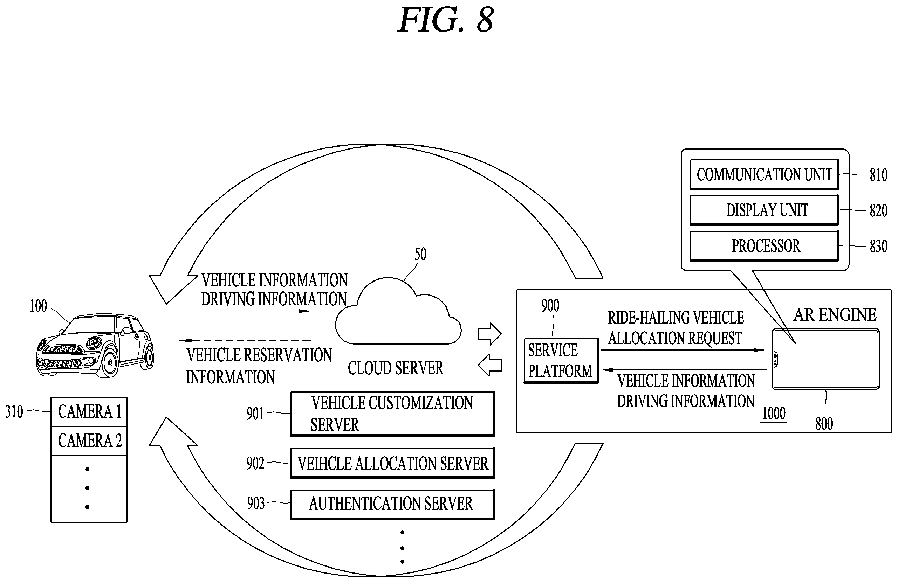

FIG. 8 is a diagram illustrating an exemplary detailed configuration of a system 1000 for providing a service for requesting a ride-hailing vehicle, the service being associated with an embodiment of the present disclosure, and also illustrating an exemplary detailed configuration of the AR service-providing apparatus 800.

In embodiments of the present disclosure, unless stated otherwise, the AR service-providing apparatus 800 described in the present specification is assumed to be a terminal device carried by a passenger (or a second passenger).

In addition, in embodiments of the present disclosure, the term "AR service-providing apparatus 800" may be used to refer to a terminal device carried by a passenger (or second passenger) before the passenger boards an unmanned vehicle, and to refer to either the terminal device carried by the passenger or a display arranged in the unmanned vehicle after the passenger boards the unmanned vehicle.

The term "AR service-providing apparatus 800 may be used in the singular or plural sense. For example, a first passenger and the second passenger each may carry respective AR service-providing apparatuses 800. In this case, each AR service-providing apparatus 800 may communicate directly with, and operate in conjunction with, the vehicle 100. Alternatively, one AR service-providing apparatus 800 may communicate indirectly with, and operate in conjunction with, the vehicle 100, through the other AR service-providing apparatus 800.

The AR service-providing apparatus 800 may be communicatively connected to the vehicle through a communication module.

In addition, an application for providing the service for requesting a ride-hailing vehicle, according to an embodiment of the present disclosure, may be installed on the AR service-providing apparatus 800 and may operate in conjunction with a service platform when executed.

That is, the AR service-providing apparatus 800 according to the embodiment of the present disclosure may operate in conjunction with a service platform for providing services for requesting a ride-hailing vehicle, performing authentication, and designating a location. In this case, the AR service-providing apparatus 800 and the service platform may constitute a system for providing the service for requesting a ride-hailing vehicle.

The service platform may provide both an AR service and an MR service.

Specifically, the AR service provided by the service platform may offer an augmented-reality experience related to displaying information associated with the service for requesting a ride-hailing vehicle, such as for recognizing the requested ride-hailing vehicle en route. In addition, the MR service provided by the service platform may provide a digital world experience based on a mixed reality related to the service for requesting a ride-hailing vehicle. In some embodiments, the MR service provided by the service platform may be initiated solely in response to a request (e.g., a passenger input or request).

An AR service-providing apparatus 800 may be configured to include a communication unit 810, a display 820, and a processor 830.

The communication unit 810 may be configured to communicate with a vehicle, and a service platform, and/or other apparatuses, servers, or cloud servers. In addition, the communication unit 810 may transmit a request to enable the service platform to communicate with a vehicle, and/or other apparatuses, servers, or cloud servers. Furthermore, the communication unit 810 may receive information about an operation result or a request result from the vehicle and/or the apparatuses, servers or cloud servers through the service platform.

The display 820 may display input and output related to the service for requesting a ride-hailing vehicle. In addition, the display 820 may display a user interface, requests for the AR service and the MR service, and/or results of initiating the AR service and the MR service, of which are provided through the service platform.

The processor 830 may include, or operate in conjunction with, an AR engine for providing the AR service and/or the MR service. That is, the processor 830 may be formed integrally with the AR engine or may operate in conjunction with an apparatus, a server, or a cloud server that includes the AR engine.

The processor 830 may include, or operate in conjunction with, an AR renderer and/or an MR renderer. For example, the processor 830 may operate in conjunction with the MR renderer that generates a digital twin map on the basis of both a three-dimensional polygon map received from a DTaaS server and an image collected through a camera of the vehicle 100 or may include the MR renderer that performs this operation.

The processor 830 may operate in conjunction with the service platform for providing the service for requesting a ride-hailing vehicle. For example, in conjunction with the service platform, the processor 830 may receive a request (e.g., a vehicle allocation request, vehicle customization information, or the like) input through the AR service-providing apparatus 800 and may cause the request to be transmitted to a related node (for example, a vehicle allocation server). In addition, for example, in conjunction with the service platform, the processor 830 may transmit, to the AR service-providing apparatus 800, information (e.g., information about an vehicle allocation, vehicle information, driving information, and the like) transmitted from a vehicle and/or a related server, and may cause a user interface and a result, which are related to this information, to be output to the AR service-providing apparatus 800.

With reference to FIG. 8, a system 1000 for providing the service for requesting a ride-hailing vehicle, according to an embodiment of the present disclosure, may be configured to include a service platform 900 and the AR service-providing apparatus 800 that communicate with at least one node. This configuration means that the system 1000 for providing the service for requesting a ride-hailing vehicle operates in conjunction with the service platform 900 and the AR service-providing apparatus 800.

The service platform 900 may communicate with one or more nodes to provide the serve for requesting a ride-hailing vehicle and may operate to provide a user interface related to a result of the communication to the AR service-providing apparatus 800.

At this point, at least one node may include the vehicle 100, a cloud server 50, a vehicle customization server 901, a vehicle allocation server 902, and an authentication server 903.

The cloud server 50 may receive vehicle information and driving information from the vehicle 100 and may provide the vehicle information and the driving information to the service platform 900. The cloud server 50 may transmit vehicle reservation information, which is transmitted through the service platform 900, to the vehicle 100, that is, the vehicle 100 that receives the vehicle allocation request.

The vehicle customization server 901 receives, through the service platform 900, prior information (e.g., an external color of the vehicle, a passenger-designated code, and the like) that is input through the AR service-providing apparatus 800 , and transmits the prior information to the vehicle 100 that receives the vehicle allocation request.

The vehicle allocation server 902 transmits the vehicle allocation request to a candidate vehicle on the basis of location information of the AR service-providing apparatus 800 and one or more requests, and transmits a result of the vehicle allocation request to the AR service-providing apparatus 800 through the service platform 900.

The authentication server 903 authenticates whether the passenger who requests the ride-hailing vehicle is the authorized passenger, based on passenger information transmitted through the service platform 900 and an image acquired through the camera 310 of the vehicle 100. Furthermore, the authentication server 903 transmits, through the service platform 900, a result of the authentication to the vehicle 100 and the AR service-providing apparatus 800 carried by the passenger.

When the ride-hailing vehicle is requested, the service platform 900 may transmit vehicle designating information and the vehicle customization information to the vehicle allocation server 902. The service platform 900 may request the vehicle customization server 901 to store and/or retrieve the customization information received from the AR service-providing apparatus 800. The service platform 900 may enable the authentication server 903 to generate a passenger authentication key, may request the authentication server 903 to perform authentication, which is based on features of the image, and may receive the result of the authentication. In addition, the service platform 900 may additionally communicate with another node (e.g., an FMS server, a driving path server, a data relay server, or the like) to update and manage vehicle destinations, to compute driving paths, and to relay data in real time between a server and a client.

The service platform 900 may receive information about a result of the response from one or more nodes and may transmit the information to the AR service-providing apparatus 800. Furthermore, the service platform 900 may enable the AR service-providing apparatus 800 to immediately output a result of rendering an AR image (real or virtual) corresponding to the vehicle customization information, onto the vehicle, or to output a user interface for executing the result.

Although not illustrated, the service platform 900 may further include a platform for Machine Learning as a Service (MLaas). The platform for MLaas transmits, to a hybrid computing system, data necessary to provide the serve for requesting a ride-hailing service. In this case, the service platform 900 may provide a more customized service for requesting a ride-hailing vehicle to steady customers based on learning through the platform for MLaas.

The AR service-providing apparatus 800 according to the embodiment of the present disclosure may display a three-dimensional map resulting from rendering, onto the ride-hailing vehicle, an AR image generated based on the vehicle information and location information of the ride-hailing vehicle.

In addition, while the three-dimensional map resulting from rendering the AR image onto the ride-hailing vehicle is being displayed, the AR service-providing apparatus 800 according to the embodiment of the present disclosure may convert the three-dimensional map into a three-dimensional neighboring-region map that is based on the location information of a passenger and in response to a received request. Furthermore, the AR service-providing apparatus 800 may additionally display an AR graphic object at a vehicle boarding- and alighting-allowed location on the basis of vehicle boarding- and -alighting difficulty attributes.

According to an embodiment, the AR graphic object may include a first AR graphic object rendered onto the vehicle boarding- and alighting-allowed location, and a second AR graphic object rendered at a vehicle boarding- and alighting-prohibited location.

The system 1000 for providing the service for requesting a ride-hailing vehicle, according to the embodiment of the present disclosure, includes the service platform 900 that operates in conjunction with the AR service-providing apparatus 800 and operates in conjunction with one or more nodes. At this point, the one or more nodes may include a ride-hailing vehicle 100, a cloud server related to the service for requesting a ride-hailing vehicle, and the like.

The service platform 900 may recognize, based on the location information of the passenger, that a ride-hailing vehicle is within a vehicle boarding-allowed section, and may request a camera of the ride-hailing vehicle to capture an image of the surroundings, including a plurality of candidate passengers, and to generate a plurality of thumbnails.

The service platform 900 may receive information about a plurality of thumbnails from the ride-hailing vehicle and may provide, to the AR service-providing apparatus 800, a user interface for selecting one of the plurality of generated thumbnails.

The service platform 900 may transmit, to the ride-hailing vehicle 100, information about the thumbnails selected through the AR service-providing apparatus 800, thereby enabling the ride-hailing vehicle 100 to track the location of a candidate passenger.

In this manner, through the AR and/or MR service, the AR service-providing apparatus 800 may accurately check, select, and provide the vehicle boarding- and alighting-allowed location that is based on the vehicle boarding- and -alighting difficulty attributes. In addition, the AR service-providing apparatus 800 operates in conjunction with the service platform 900 to enable the ride-hailing vehicle and the passenger to identify each other through the AR and/or MR service, thereby ensuring safer and accurate vehicle boarding.

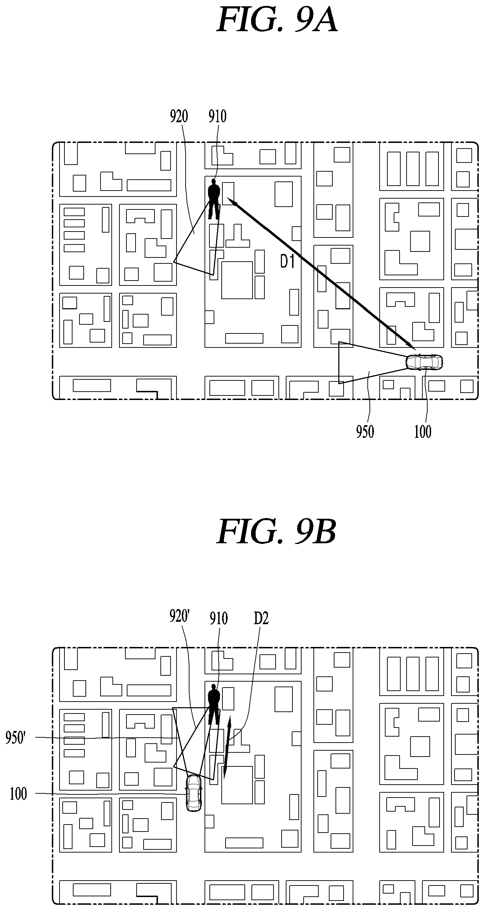

FIGS. 9A and 9B are views that are referenced to describe distance conditions related to a ride-hailing vehicle allocation request associated with an embodiment of the present disclosure.

In an embodiment of the present disclosure, a distance between the ride-hailing vehicle and the passenger that lies outside the field of view of their respective cameras is defined as a "first distance."

In an embodiment of the present disclosure, the distance between the ride-hailing vehicle and the passenger that lies inside the field of view of their respective cameras is defined as a "second distance." In addition, the "second distance" includes a distance at which the ride-hailing vehicle and the passenger can capture images of each other because no stationary obstacles (e.g., structures such as buildings, roadside trees, or bridge piers) are present in a straight line therebeween.

In embodiments of the present disclosure, under the condition that the first distance is satisfied, the passenger ascertains the current location of the ride-hailing vehicle through the three-dimensional map resulting from rendering the AR image based on the location information and the vehicle information. In addition, under the condition that the first distance is satisfied, the ride-hailing vehicle recognizes the location of the passenger on the basis of the location that is designated by the passenger using GPS or the like.

With reference to FIG. 9A, no field of view 920 of a passenger 910 (or an image capturing range 920 of the AR service-providing apparatus carried by the passenger 910) overlaps an image capturing image range 950 of the ride-hailing vehicle 100 en route, Accordingly, in this situation, the first distance D1 is satisfied. In this case, actual mutual recognition of the passenger and the ride-hailing vehicle does not occur.

In embodiments of the present disclosure, under the condition that the second distance is satisfied, the ride-hailing vehicle may recognize, based on the location information of the passenger, that it is within the vehicle boarding-allowed section.

With reference to FIG. 9B, a field of view 920' of the passenger 910 (or an image capturing range 920' of the AR service-providing apparatus carried by the passenger 910) overlaps an image capturing range 950' of the ride-hailing vehicle 100 approaching the passenger. In this situation, the second distance D2 is satisfied.

In this case, the passenger may actually recognize the ride-hailing vehicle through information such as the license plate number of the ride-hailing vehicle.

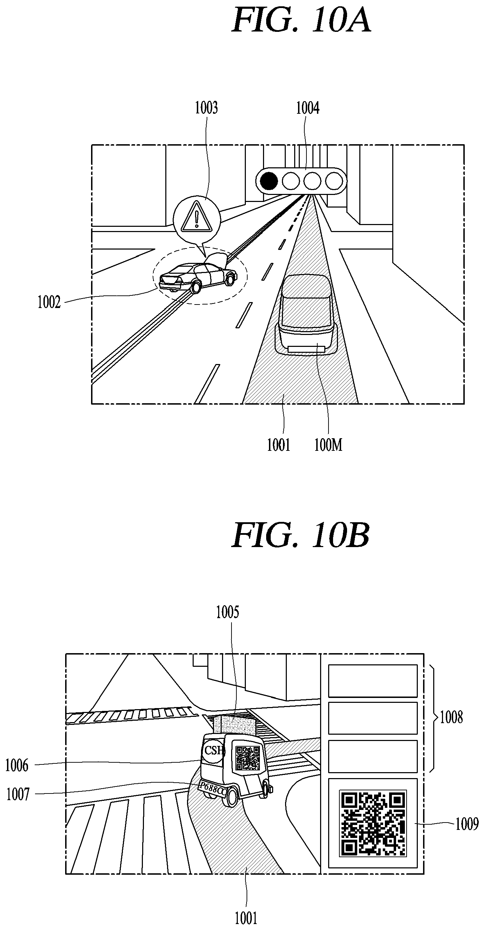

In addition, in an embodiment, when the ride-hailing vehicle is within the field of view or the image capturing range, the passenger may ascertain that an AR object rendered based on the vehicle information and the location information is actually displayed on the ride-hailing vehicle, thereby more accurately recognizing that the ride-hailing vehicle is the vehicle requested by the passenger. This recognition will be described in more detail below with reference to FIGS. 10A to 10E.

However, in this situation, even under the condition that the second distance D2 is satisfied, the ride-hailing vehicle is unable to accurately identify the passenger until the passenger approaches the ride-hailing vehicle and attempts to board the ride-hailing vehicle. Accordingly, a higher-quality service cannot be provided to the passenger, and passengers who carry baggage at crowded airports where many people are waiting experience increased discomfort.

Accordingly, according to the present disclosure, under a condition that the second distance is satisfied, the vehicle may provide an image of a candidate passenger, may track the passenger based on the passenger-selected image, and accurately recognize the passenger before vehicle boarding, thereby providing a good-quality service.

In addition, according to the present disclosure, the vehicle may recommend to a passenger that a vehicle boarding and alighting location be changed (to a location where vehicle boarding and alighting are facilitated), and the passenger may also provide the exact location after the vehicle boarding and alighting location is changed in advance.

In this manner, various embodiments of the present disclosure are provided in which a ride-hailing vehicle and a passenger can recognize and interact with each other even before the passenger boards the ride-hailing vehicle.

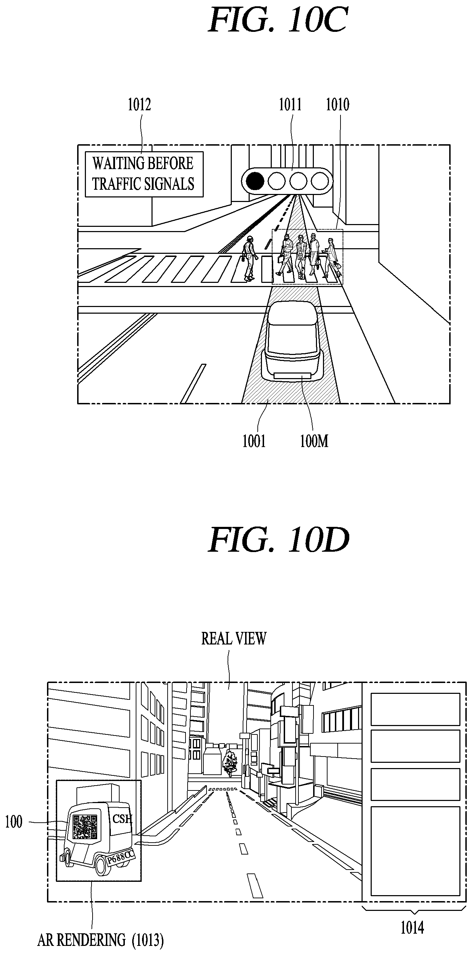

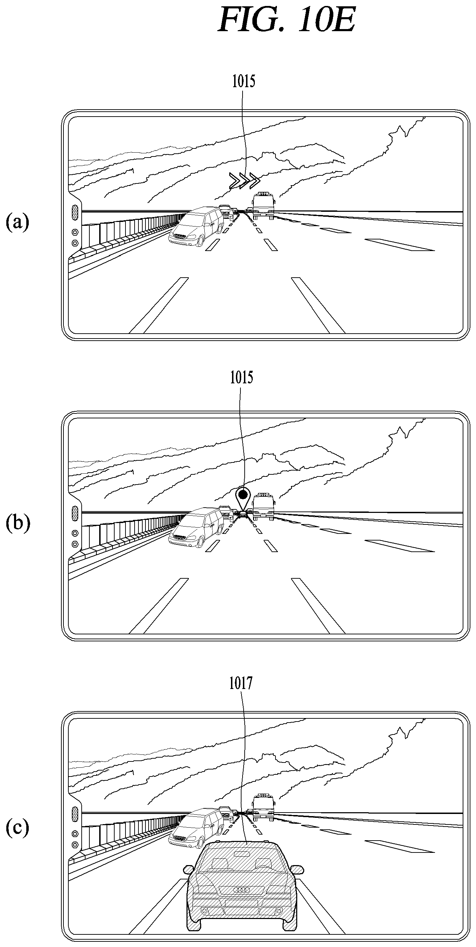

FIGS. 10A, 10B, 10C, and 10E are views illustrating examples, respectively, in which the location and driving state of the ride-hailing vehicle associated with embodiments of the present disclosure are displayed in the form of an MR map view, thereby guiding a passenger to board the ride-hailing vehicle.

FIGS. 10A to 10C illustrate examples, respectively, in which, under the condition that the "first distance" is satisfied, a three-dimensional map based on mixed reality (MR) and an image of a ride-hailing vehicle are displayed on the display of the AR service-providing apparatus 800.

Specifically, as illustrated in FIG. 10A, the AR service-providing apparatus displays a ride-hailing vehicle 100M en route, in the form of a bird's-eye view, on the MR map view generated based on the location information and driving information of the ride-hailing vehicle.

To this end, the AR service-providing apparatus may operate in conjunction with the service platform that provides the MR service based on a three-dimensional map including meta data (e.g., service metadata or three-dimensional assets), a three-dimensional polygon map, a digital twin (DT) map, or the like, or may operate in conjunction with one or more nodes (e.g., cloud servers) through the service platform.

In the bird's-eye view in FIG. 10A, traffic light information 1004 based on C-ITS or camera recognition, a driving path 1001 to a vehicle boarding location designated by a passenger, an object 1002 (for example, another vehicle) recognized through a sensor of the ride-hailing vehicle, and related attention information 1003 may be displayed together on a three-dimensional map.

In FIG. 10B, while the bird's-eye view is showing the ride-hailing vehicle being driven along the driving path 1001 on the three-dimensional map, various AR objects based on customization information designated by the passenger who requests the ride-hailing vehicle may be rendered and displayed. For example, on the ride-hailing vehicle, a passenger-preset color may be rendered onto a hat-shaped light 1005, and a passenger-preset unique code 1006 and a license plate number 1007 may be rendered onto an external display of the ride-hailing vehicle. In addition, identification code information 1008 and QR information 1009 for passenger authentication may be additionally displayed on one region (e.g., on the right-side region) of a display illustrated in FIG. 10B.

Subsequently, as illustrated in FIG. 10C, while the ride-hailing vehicle 100M is being displayed in the bird's-eye view as being driven along the driving path 1001, a traveling object recognized through various sensors included in the real vehicle, for example, a pedestrian 1010, traffic signal information 1011, and driving-related information, for example, a word balloon object 1012 including the text "waiting before traffic signals" may be rendered in real time and displayed.

In the MR map view illustrated in FIGS. 10A to 10C, three-dimensional rotation, three-dimensional object rotation, view zooming in or out, and the like may be performed on the basis of various types of input.

Subsequently, FIG. 10D illustrates an example in which, under the condition that the second distance is satisfied, a real view is displayed on the display of the AR service-providing apparatus 800, and in which an AR object based on the customization information is rendered onto the real ride-hailing vehicle in the real view.

FIG. 10D illustrates a situation where the real ride-hailing vehicle 100 is within an image capturing range of the passenger AR service-providing apparatus 800 carried by the passenger. At this point, the accurate location of the ride-hailing vehicle 100 is tracked based on the unique information thereof, and an AR graphic object 1013, generated through the customization information provided as the prior information by the passenger, is realized by being rendered in real time onto the real ride-hailing vehicle 100, for example, onto the external display. Identification information of the ride-hailing vehicle, authentication information, and the like may be provided on one region (e.g., the right-side region) of the AR service-providing apparatus 800.

Specifically, the AR service-providing apparatus 800 recognizes a plurality of surrounding vehicles within a preview image of the camera. The AR service-providing apparatus 800 matches features of the recognized surrounding vehicles with features derived from customization information preset by a passenger. Based on the similarity degree, the AR service-providing apparatus 800 determines the real ride-hailing vehicle and tracks the location thereof. At this point, the features of the vehicle may include at least one of the following: a vehicle color, a vehicle type or model, a hood model, the presence or absence of a hat-shaped light, a wheel shape, a headlight shape, a license plate number, or an external identification display letter and/or identification code (QR).

The AR service-providing apparatus 800 may render in real time an image box display around the determined ride-hailing vehicle and may perform tracking display in such a manner that the passenger can easily track the determined ride-hailing vehicle. That is, an AR object that highlights the finally determined ride-hailing vehicle may be rendered, or the background of the remaining real view, excluding the finally determined ride-hailing vehicle, may be processed in black and white. In addition, although not illustrated, an AR word balloon image indicating a vehicle for the passenger to board may be displayed on the finally determined ride-hailing vehicle. Alternatively, a unique feature portion (e.g., a vehicle wheel) of the exterior appearance of the vehicle that is customized by the passenger may be highlighted. In addition, although not illustrated, for the user sensitive to personal information, there is no change to the external E-link and/or transparent display of the real vehicle, and an AR graphic object may also apply only to a vehicle displayed on the AR service-providing apparatus 800. In addition, in some embodiments, in a case where the finally determined ride-hailing vehicle is hidden by a nearby obstacle (for example, a surrounding vehicle), the location of the vehicle, which is expected at the current point in time (a "second point in time") determined by taking into consideration the location, movement direction, and speed of the vehicle at the immediately previous point in time (a "first point in time"), may be predicted. Then, the finally determined ride-hailing vehicle may be tracked by partially highlighting the predicted location.

Subsequently, FIG. 10E illustrates examples of displays that vary depending on the location of the ride-hailing vehicle on the three-dimensional map in the AR service-providing apparatus 800. When the ride-hailing vehicle does not appear on the displayed three-dimensional map, the AR service-providing apparatus 800 provides guidance on the approximate location of the ride-hailing vehicle by displaying direction information 1015. In addition, in a case where the ride-hailing vehicle is present on the displayed three-dimensional map, but is difficult to recognize due to being at a great distance, guidance may be provided by rendering only location information 1016. When the ride-hailing vehicle appears in full view on the three-dimensional map in the AR service-providing apparatus 800, an AR object 1017 based on the customization information of the passenger is rendered on the external display of the vehicle or on the entire vehicle. Although not illustrated, in response to a request, the AR service-providing apparatus 800 may additionally display information about a nearby POI on the driving path of the ride-hailing vehicle, and the passenger may change the initially set vehicle boarding location based on the displayed POI information.

The AR object that varies in form depending on the location of the ride-hailing vehicle on the three-dimensional map is rendered, thereby more accurately identifying the ride-hailing vehicle requested by the passenger.

In some embodiments, the external E-link and/or transparent display of the ride-hailing vehicle may be changed to apply text, an image, a color, and the like based on the customization information of the passenger. At this point, the customization information of the passenger includes the color and texture of the vehicle, which are set as preferences by the user, and preset unique ID information.

In this regard, the customization information of the passenger preset through the AR service-providing apparatus 800 may be uploaded to the vehicle customization server 901 through the service platform. The customization information stored in a database within the vehicle customization server 901, along with the unique ID, the current location on GPS, the destination, and other information necessary for requesting the ride-hailing vehicle, may be transmitted to the vehicle allocation server 902. Accordingly, the AR service-providing apparatus 800 applies external features, customized in advance by the user, to the vehicle actually allocated to the user, and thus renders the external features onto the three-dimensional map. That is, among the external features of the allocated vehicle, features identifiable with the naked eye are applied to a three-dimensional model in their original form, and are displayed on the three-dimensional map.

A method of recognizing an unmanned vehicle to be boarded by the passenger from among a plurality of vehicles, using a camera of the AR service-providing apparatus 800 carried by the passenger, for example, a camera of the terminal device carried by the passenger, has been described above. Embodiments relating to a method by which, before the passenger boards the vehicle, the vehicle accurately recognizes the passenger by providing a plurality of passenger images acquired through the camera of the vehicle to the AR service-providing apparatus 800 will be described below.

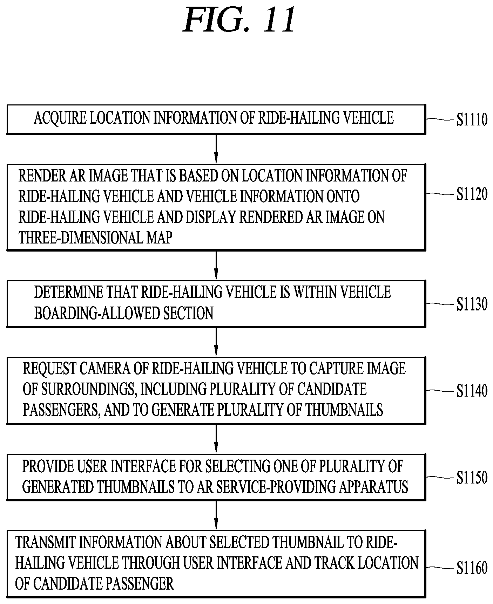

FIG. 11 is an exemplary flowchart that is referenced to describe a method of determining and authenticating the passenger who requests the ride-hailing vehicle using a thumbnail associated with an embodiment of the present disclosure.

Each step in FIG. 11 is performed by either the service platform or the AR service-providing apparatus operating in conjunction with the service platform, both of which constitute the system for providing the service for requesting a ride-hailing vehicle. In addition, some steps in FIG. 11 may be performed by the AR service-providing apparatus, and some steps may be performed through the service platform communicating with one or more nodes. At this point, one or more nodes include a ride-hailing vehicle and a cloud server that communicate with the service platform.

Specifically, the service platform may transmit or receive data, commands, or signals to or from the ride-hailing vehicle, one or more servers, and/or the AR service-providing apparatus, thereby causing some steps in FIG. 11 to be performed. In addition, the AR service-providing apparatus, operating in conjunction with the service platform, may transmit data, commands, or signals to the ride-hailing vehicle and/or one or more servers through the service platform or may output or change information to the AR service-providing apparatus on the basis of data, commands, or signals received from the ride-hailing vehicle or one or more servers, thereby causing some steps in FIG. 11 to be performed.

With reference to FIG. 11, the AR service-providing apparatus 800 may acquire the location information of the ride-hailing vehicle in real time, either directly or through the service platform 900 (S1110). To this end, the AR service-providing apparatus 800 or the service platform 900 may receive location data directly from the ride-hailing vehicle, or the service platform 900 may receive GPS-based location data through one or more nodes.

Accordingly, the AR service-providing apparatus 800 may render an AR image that is based on the location information of the ride-hailing vehicle and vehicle information onto the ride-hailing vehicle and may display the rendered AR image on the three-dimensional map (S1120).

At this point, the ride-hailing vehicle displayed on the three-dimensional map is displayed in a bird's-eye view by taking into consideration the driving information of the ride-hailing vehicle, for example, the driving direction and driving speed thereof. In addition, the external features based on the customization information preset by the passenger are displayed on the ride-hailing vehicle shown on the three-dimensional map.

The signal information, the POI information, and the like, which are additionally displayed while the ride-hailing vehicle is being displayed in a bird's-eye view on the AR service-providing apparatus 800, have been described in detail with reference to FIGS. 10A to 10C, and, therefore, will not be further described

When the distance between the ride-hailing vehicle and the passenger (or between the ride-hailing vehicle and the AR service-providing apparatus 800 carried by the passenger) changes from the "first distance" to the "second distance," the AR service-providing apparatus 800 may determine that the ride-hailing vehicle onto which the AR image is rendered is within the vehicle boarding-allowed section (S1130).

At this point, the vehicle boarding-allowed section may be a section in which the distance between the vehicle and the passenger satisfies the second distance (i.e., a section in which the image capturing range of the camera included in the ride-hailing vehicle and the image capturing range of the camera included in the AR service-providing apparatus are equal to or less than a distance range within the ride-hailing vehicle and the AR service-providing apparatus can capture images of each other. Alternatively, the vehicle boarding-allowed section may be a section in which the location of the vehicle is within a predetermined radius (e.g., 10 to 15 m) from the vehicle boarding location. In addition, the vehicle boarding-allowed section may refer to a case where the distance between the vehicle and the passenger satisfies the second distance and where the ride-hailing vehicle is not in a stopping-prohibited section.

In a case where, in this manner, the ride-hailing vehicle is within the vehicle boarding-allowed section, the AR service-providing apparatus 800 may recognize the ride-hailing vehicle based on a change in the external appearance features of the ride-hailing vehicle.

The vehicle may estimate the passenger to some extent through the location information and passenger information that are input or preset in advance by the passenger, but has difficulty in accurately recognizing the passenger in a very crowded place (e.g., a stop). Accordingly, the following steps for providing a much improved service in which the vehicle accurately specifies a passenger and reduces the discomfort of the specified passenger may be further performed.

Specifically, in response to the ride-hailing vehicle being within the vehicle boarding-allowed section, the service platform may request the camera of the ride-hailing vehicle to capture an image of the surroundings, including a plurality of candidate passengers and to generate a plurality of thumbnails (S1140).

Specifically, the service platform 900 may request a plurality of external cameras of the ride-hailing vehicle to capture an image of the surroundings, including all nearby passengers within the vehicle boarding-allowed section, and to generate a thumbnail on a per-candidate-passenger basis by analyzing the captured image. At this point, each generated thumbnail is matched to a corresponding unique ID. The service platform 900 transmits information about the thumbnail generated by the ride-hailing vehicles and information about the ID to the AR service-providing apparatus 800. In addition, the service platform 900 may upload the information about the thumbnail generated by the ride-hailing vehicle and the information about the ID to at least one node.

Subsequently, the service platform 900 may provide a user interface for selecting one of a plurality of generated thumbnails to the AR service-providing apparatus 800 (S1150). At this point, the user interface may include an API related to displaying the plurality of thumbnails, selecting any one of them, and transmitting the selected information.

For example, the service platform 900 may provide the user interface for displaying a plurality of thumbnails in decreasing order of similarity to the passenger information that is input or set by the passenger and for selecting, in response to input by the passenger, a thumbnail corresponding to the passenger from among the plurality of thumbnails. In addition, for example, the service platform 900 may provide a user interface for displaying a plurality of thumbnails in a card format that can be flicked in the horizontal or vertical direction and for allowing selection of one of the plurality of thumbnails. In addition, for example, the service platform 900 may provide a user interface for allowing selection of one of the plurality of thumbnails in a state where each thumbnail overlaps a corresponding position within the entire image.

Subsequently, service platform 900 may receive information about the selected thumbnail from AR service-providing apparatus 800 through the user interface. Then, the service platform 900 may transmit the information about the selected thumbnail to the ride-hailing vehicle through the user interface, thereby enabling the ride-hailing vehicle to track the location of the candidate passenger (S1160).

Specifically, the service platform 900 transmits the received ID and features of the selected thumbnail to the ride-hailing vehicle and one or more nodes to share them. Furthermore, the service platform 900 enables the ride-hailing vehicle to specify the passenger based on the features (hereinafter referred to as "first features") of the thumbnail matched to the ID and to track the specified passenger through the camera.

The AR service-providing apparatus 800 may display a consensus message in response to the selection of a thumbnail.

When the distance between the ride-hailing vehicle and the passenger satisfies a third distance, the vehicle may come to a stop. At this point, the third distance may refer to a case where the location information of the ride-hailing vehicle and information about the vehicle boarding location, which is input or set, are matched to each other, or substantially coincide, with the selection of the thumbnail by the AR service-providing apparatus 800 serving as a starting condition.

In an embodiment, when the vehicle comes to a stop, the service platform 900 may compare features (hereinafter as "second features) of an image of a candidate (or a pedestrian) recognized through a side camera of the vehicle with the first features, thereby determining the final passenger.

For example, when the vehicle comes to a stop, the service platform 900 may determine whether the similarity degree between the second features of the candidate passenger approaching the vehicle and the first features used to track the passenger reaches or exceeds a reference value, thereby allowing the ride-hailing vehicle to perform automatic passenger authentication and/or a vehicle boarding guidance operation.

At this point, if the similarity degree between the first features and the second features reaches or exceeds the reference value, the automatic passenger authentication succeeds; otherwise, the automatic passenger authentication fails.

In addition, at this point, the vehicle boarding guidance operation may include displaying information for guiding the passenger to board the ride-hailing vehicle through the external appearance features (e.g., E-ink and/or external transparent display) of the ride-hailing vehicle, or outputting voice guidance information externally that corresponds to the displayed information.

In this manner, according to an embodiment of the present disclosure, not only may the passenger accurately identify the ride-hailing vehicle, but the ride-hailing vehicle may also, in advance, specify and authenticate the passenger through the thumbnail selected by the passenger before vehicle boarding, thereby enabling smooth interaction and authentication.

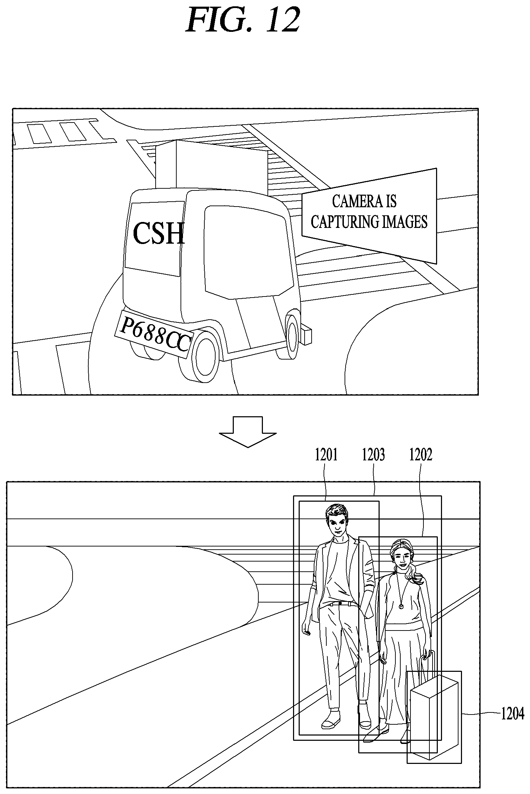

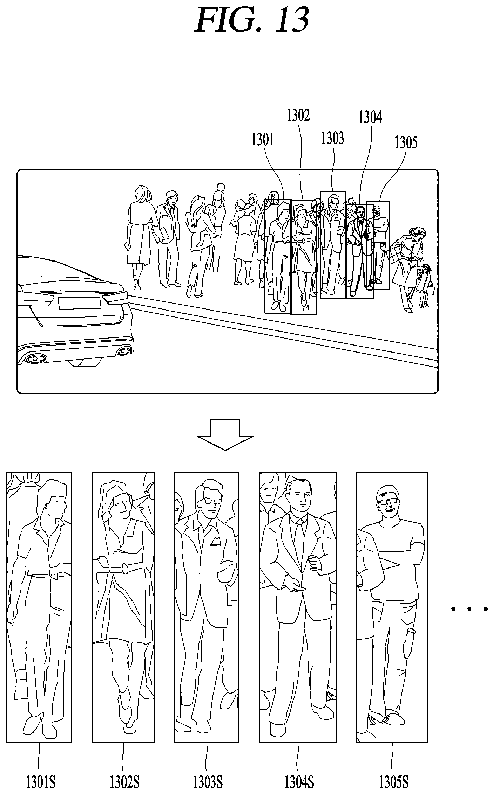

FIGS. 12 and 13 are views that are referenced to describe a situation in which, in response to a request from the service platform associated with an embodiment of the present disclosure, the vehicle generates thumbnails for candidate passengers and provides the generated thumbnails to the AR service-providing apparatus.

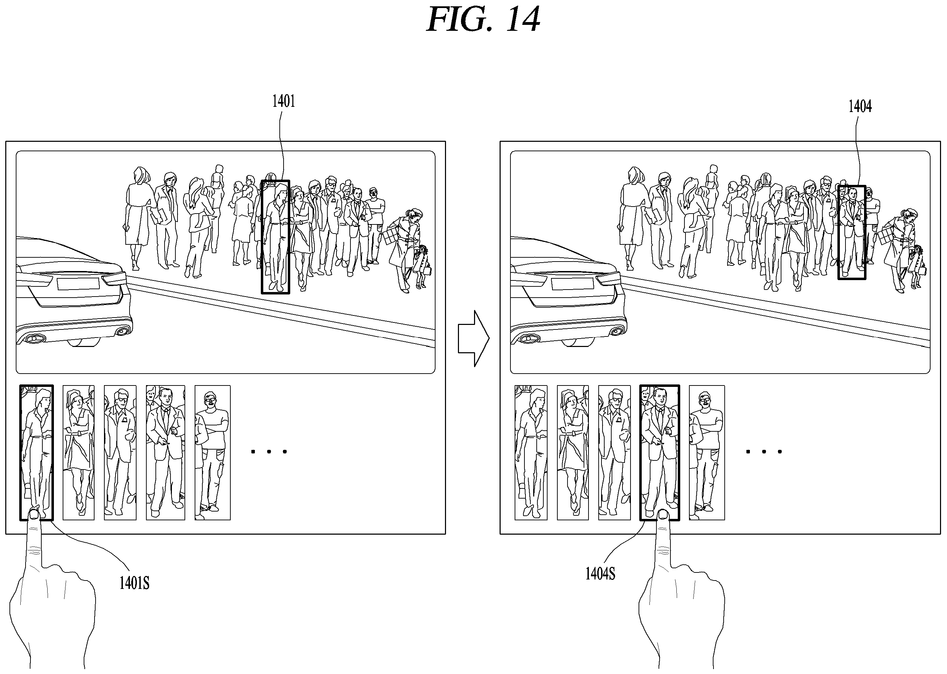

In addition, FIG. 14 is a view that is referenced to describe a situation in which the AR service-providing apparatus associated with an embodiment of the present disclosure selects the passenger who requests the ride-hailing vehicle using a thumbnail.

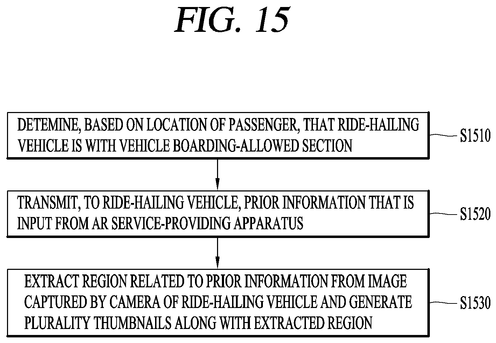

In addition, FIG. 15 is an exemplary flowchart that is referenced to describe a method of generating a thumbnail based on prior information of the passenger who requests the ride-hailing vehicle associated with an embodiment of the present disclosure.

First, with reference to FIG. 12, when the ride-hailing vehicle enters the vehicle boarding-allowed section based on the vehicle boarding location that is input or set by the passenger, a plurality of external cameras of the ride-hailing vehicle captures images of the candidates who are present in the vehicle boarding-allowed section. In addition, the ride-hailing vehicle generates a thumbnail for each candidate passenger from the captured images.

Specifically, the ride-hailing vehicle detects, through the plurality of external cameras, objects capable of boarding the ride-hailing vehicle, and generates a thumbnail for each detected object.

In an embodiment, when the plurality of thumbnails is generated, a determination may be made as to whether to include the passenger information (the prior information or additional information) that is input or set in advance, and, on the basis of a result of the determination, a respective thumbnail may be generated for each detected object.

In this regard, with reference to FIG. 15, the AR service-providing apparatus 800 determines, through the service platform 900 and based on the location information of the passenger, that the vehicle is within the vehicle boarding-allowed section (S1510). That is, the service platform 900 may determine that the vehicle is within the vehicle boarding-allowed section, based on the current location information of the passenger or the vehicle boarding location information designated by the passenger.

When a passenger requests the ride-hailing vehicle, the service platform 900 may transmit additional information, which is input from the AR service-providing apparatus 800, to the ride-hailing vehicle (S1520). At this point, the additional information (the passenger information or the prior information) includes external features of the passenger, such as gender and clothing, stored unique information, the number of baggage items, and the presence or absence of a fellow passenger.

Subsequently, the service platform 900 may extract a region related to the additional information from the image captured by the camera of the ride-hailing vehicle. Accordingly, a plurality of thumbnails, along with the extracted region, may be caused to be generated (S1530).

With reference to FIG. 12, first image objects 1201 and 1202 and a first recognition box are displayed on each of the candidate passengers detected from the captured image. The passage information is input or set in advance by the passenger and is transmitted to the ride-hailing vehicle. Second image objects 1203 and 1204 are displayed on an object that is recognized on the basis of the passenger information. For example, in a case where the terms "bag" and "presence of a fellow passenger" are included as the passenger information that is input or set in advance by the passenger, the second image object 1203 and 1204 and a second recognition box are displayed on an object matched to the respective passenger information.

According to an embodiment, in a case where the passenger information is included, an edited thumbnail including the object matched to the passenger information may be generated. To this end, when the ride-hailing vehicle is requested, the service platform 900 transmits additional information, which is input in the AR service-providing apparatus 800. Accordingly, a region related to the additional information is caused to be further extracted from the image captured by the camera in the called vehicle. Then, a plurality of thumbnails, along with the extracted region, is caused to be generated.

With reference to FIG. 13, information about a plurality of generated thumbnails is received through the service platform 900 and is output then on the display of the AR service-providing apparatus 800. As illustrated in FIG. 13, a plurality of thumbnails, for example, thumbnails 1301S to 1305S, generated from one image including a plurality of candidate passengers, for example, candidate passengers 1301 to 1305, are provided for selection. At this point, when one is selected from among the plurality of generated thumbnails, for example, the thumbnails 1301S to 1305S, the selected thumbnail is displayed in a manner that is matched to a position in the image including all the candidate passengers 1301 to 1305.

For example, as illustrated in FIG. 14, when the first thumbnail 1401S is selected as input on the AR service-providing apparatus 800, a bounding box is displayed on a candidate passenger 1401 corresponding to the first thumbnail 1401S, in the entire image. When another thumbnail 1410S is selected as input on the AR service-providing apparatus 800, a bounding box is displayed on a candidate passenger 1404 corresponding to the thumbnail 1401S received as selection and input, in the entire image. Accordingly, the passenger may select the passenger's own thumbnail accurately and intuitively by simultaneously checking the individual thumbnail and an image of the surrounding region.

In some embodiments, for personal privacy protection, human faces in the generated thumbnail and the entire image may be provided in a blurred state. In this case, the passenger may select the passenger's own thumbnail by taking into consideration external features, excluding the passenger's location, posture, and face.

In FIG. 14, when additional input is received after the first thumbnail 1401S or another thumbnail 1401S is selected as input, the corresponding thumbnail is determined as the selected thumbnail, and a consensus message is output. Subsequently, the AR service-providing apparatus 800 transmits information about both the ID and features of the thumbnail selected by the vehicle (through the service platform). Then, the ride-hailing vehicle recognizes the candidate passenger corresponding to the transmitted ID of the thumbnail and, in real time, tracks the location of the candidate passenger recognized based on the corresponding features.

Now, the passenger may readily identify the ride-hailing vehicle with the naked eye. Accordingly, as described with reference to FIG. 10D, the external features of the vehicle that appear through the AR service-providing apparatus 800 are changed based on the customization information of the passenger. For example, the hat-shaped light on the ride-hailing vehicle may be changed to a passenger's preset color, or identification letters and/or a QR code for authentication may be displayed on the external or internal display of the vehicle.

According to an embodiment, in a case where the passenger is not among the plurality of thumbnails provided to the AR service-providing apparatus 800, "input for non-selectivity" may be performed using the provided user interface. In this manner, in response to the input for non-selectivity applied to the plurality of thumbnails, the service platform 900 transmits an image-recapturing command to the ride-hailing vehicle. In response to the image-recapturing command, the vehicle regenerates a thumbnail and transmits the regenerated thumbnail to the AR service-providing apparatus 800 through the service platform 900.

In addition, although not illustrated, in some embodiments, in response to a thumbnail being selected as input, the AR service-providing apparatus 800 may change a first AR image based on the location information and the vehicle information of the ride-hailing vehicle to a second AR image based on the customization information of the passenger, and then may render the resulting second image onto the ride-hailing vehicle.

Accordingly, the passenger's selection and the vehicle matching process are performed almost simultaneously, and thus the passenger recognizes the ride-hailing vehicle more intuitively.

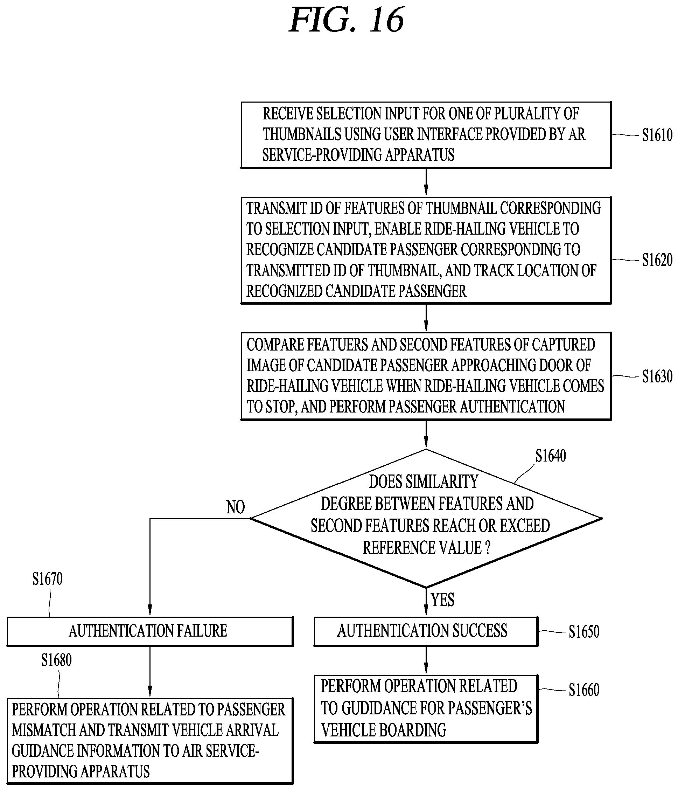

FIG. 16 is an exemplary flowchart that is referenced to describe a method of authenticating the passenger who requests the ride-hailing vehicle based on the features of the selected thumbnail associated with an embodiment of the present disclosure.

With reference to FIG. 16, the AR service-providing apparatus 800 receives selection input for one of the plurality of thumbnails using the provided user interface (S1610).

The ID and features of a thumbnail corresponding to the selection input are transmitted to the ride-hailing vehicle through the service platform 900. The service platform 900 enables the ride-hailing vehicle to recognize a candidate passenger corresponding to the thumbnail ID and continues to track the location of the recognized candidate passenger based on the corresponding features (the first features) (S1620).

At this point, tracking of the location of the candidate passenger continues until the passenger boards the ride-hailing vehicle, cancels boarding, or until the passenger authentication is performed.

When transmitting the information about the ID and features of the thumbnail corresponding to the selection input, the service platform 900 may transmit the consensus message to the AR service-providing apparatus 800. In addition, the service platform 900 may upload the information about the ID and features of the thumbnail corresponding to the selection input to the vehicle and at least one node in communication with the service platform 900.

Next, in response to the ride-hailing vehicle coming to a stop, the service platform 900 compares the first features of the image based on the ID of the thumbnail corresponding to the selection input and the second features acquired from a captured image of the candidate passenger approaching the door of the ride-hailing vehicle, thereby performing passenger authentication (S1630).

At this point, a comparison between the first features and the second features may be performed by analyzing whether the number of common features reaches or exceeds a predetermined value (e.g., 7 to 8 out of a maximum value of common features 10). Alternatively, comparison between the first features and the second features may be performed by analyzing whether the overall similarity degree therebetween reaches or exceeds a predetermined ratio (e.g., 80%).

The service platform 900 determines whether or not the similarity degree between the first features and the second features reaches or exceeds a reference value (S1610). When the similarity degree reaches or exceeds the reference value, the service platform 900 declares "authentication success" (S1650).

Accordingly, the service platform 900 may enable the vehicle to perform an operation related to guiding the passenger to board the vehicle (S1660). For example, a welcome message "Welcome" may be output through the external E-Ink or the external display of the ride-hailing vehicle. Alternatively, for example, guidance is provided in such a manner as to unlock the door or scan the QR code. In some embodiments, the process of unlocking the door may include QR code authentication or communication, such as UWB, WiFi, or BT, between the vehicle and the AR service-providing apparatus carried by the passenger.

When the result of the determination (S1610) is that the similarity degree between the first features and the second features does not reach the reference value, the service platform 900 declares "authentication failure" (S1670).

Accordingly, the service platform 900 enables the vehicle to perform an operation related to passenger mismatch and transmits vehicle arrival guidance information to the AR service-providing apparatus 800 (S1680). For example, the vehicle may display the mismatch message "You are not the correct passenger" on the external display of the vehicle. In addition, for example, acceptance information for extracting the second features and re-comparing the first features and the second features, as in the previous step, may be displayed on the AR service-providing apparatus 800.

In addition, although not illustrated, when the authentication fails through the selection input, the customization information may be included in the vehicle, thereby visually guiding the passenger to board the vehicle, and passenger authentication may be caused to be performed depending on a UWB signal is detected.

In the embodiments described below, the display of the vehicle may function as the AR service-providing apparatus 800. In addition, in some embodiments described below, a plurality of AR service-providing apparatuses, for example, first and second AR service-providing apparatuses, may be provided.

In the related art, in a case where the unmanned vehicle needs to perform changes in a ride-hailing schedule, such as when the passenger changes a vehicle boarding or alighting location, when the passenger changes a destination, when the passenger requests ride-sharing, and when the passenger adds a waypoint, the passenger experiences the inconvenience of making a call to a service associate by pressing a control service center call button within the vehicle, to change the ride-hailing schedule through the third party communication.

In the following embodiments, a method will be described in which the passenger interacts directly with the vehicle through the AR service-providing apparatus, without the third party communication, to request changes in a ride-hailing schedule, such as when the passenger changes a vehicle boarding or alighting location, when the passenger changes a destination, when the passenger requests ride-sharing, and when the passenger adds a waypoint.

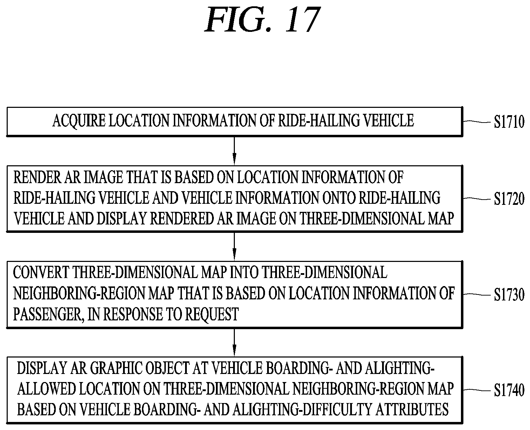

FIG. 17 is an exemplary flowchart that is referenced to describe a method of providing guidance on, and selecting, the vehicle boarding location using three-dimensional map information associated with an embodiment of the present disclosure.

Each step in FIG. 17 may be performed by the AR service-providing apparatus 800. In some embodiments, the AR service-providing apparatus 800 may display the three-dimensional map and may communicate with or operate in conjunction with one or more nodes for providing the AR or MR service. In addition, the AR service-providing apparatus 800 may include the AR engine or renderer for rendering the AR object. In addition, unless otherwise described, it is assumed that the processor 830 of the AR service-providing apparatus 800 operates to perform each step in FIG. 17.

With reference to FIG. 17, first, the AR service-providing apparatus 800 may, in real time, acquire the location information of the ride-hailing vehicle (S1710). To this end, the AR service-providing apparatus 800 may receive the location data directly from the ride-hailing vehicle, or the service platform 900 may receive the GPS-based location data through one or more nodes.

In addition, the AR service-providing apparatus 800 may render an AR image based on the acquired location information and the vehicle information (and the driving information) of the ride-hailing vehicle onto the ride-hailing vehicle, and may display the resulting AR image on the three-dimensional map (S1720).

At this point, the ride-hailing vehicles displayed on the 3-dimensional map are displayed in a bird's-eye view on the 3-dimensional map by taking into consideration the driving information of the ride-hailing vehicles, for example, the driving direction and the driving speed. In addition, the external features on the customization information preset by the passenger are displayed on the ride-hailing vehicle shown on the three-dimensional map.

Subsequently, in response to the request, the AR service-providing apparatus 800 may convert the 3-dimensional map into a 3-dimensional neighboring-region map that is based on the location information of the passenger (S1730).

At this point, the location information of the passenger may refer to the current location of the AR service-providing apparatus 800 based on GPS. Alternatively, the location information of the passenger may be vehicle boarding (alighting) location information that is input or set in advance through the AR service-providing apparatus 800.

The passenger may request an unmanned vehicle while at an unfamiliar place or may alight from the unmanned vehicle at the unfamiliar place. For example, in a case where the unmanned vehicle is requested while at a place which the passenger is visiting for the first time or where the unmanned vehicle is requested during nighttime, the passenger may want to change the ride-hailing schedule after accurately informing the unmanned vehicle of the passenger's own current location or checking whether or not the current location is suitable for vehicle boarding or alighting.

In response to the passenger's request, to generate the three-dimensional neighboring-region map based on the location information of the passenger, the AR service-providing apparatus 800 may communicate with one or more nodes to collect information about three-dimensional map buildings, roads, terrain-related polygonal and text data, the unique ID of each neighboring building, and the unique ID of each road section.

According to an embodiment, on the basis of input specifying a specific location on the three-dimensional neighboring-region map, the AR service-providing apparatus 800 may provide an MR view for the specific location.

To this end, the AR service-providing apparatus 800 may communicate with a DTaaS server (not illustrated) as one node, and may enable the DTasS server to operate in conjunction with a POI database in which POI service data about each building or each region included in the map information are stored, thereby providing an MR view for the surroundings of the specific location.

Subsequently, the AR service-providing apparatus 800 may display (render) the AR graphic object at the vehicle boarding- and alighting-allowed location on the three-dimensional neighboring-region map, based on the vehicle boarding- and -alighting difficulty attributes (S1740).

At this point, the vehicle boarding- and -alighting difficulty attributes may be determined on the basis of whether the ride-hailing vehicle is allowed to come to a stop. In addition, the vehicle boarding- and -alighting difficulty attributes may be determined on the basis of the location information of the passenger, three-dimensional map buildings, roads, terrain-related polygonal and text data, the unique ID of each neighboring building, and the unique ID of each road section. The terrain-related polygonal and texture data may include data about a 3D polygon model that provides the volume of a structure and has texture data either formed or not formed on the surface of the structure.

In an embodiment, the AR graphic object rendered onto the vehicle boarding- and -alighting-allowed location may include the first AR graphic object representing the vehicle boarding- and alighting-allowed location and the second AR representing the vehicle boarding- and alighting-prohibited location, on the basis of the vehicle boarding- and alighting- difficulty attributes.

In an embodiment, the AR service-providing apparatus 800 may change the boarding or alighting location by selecting the AR graphic object rendered onto the 3-dimensional neighboring-region map. Specifically, the AR service-providing apparatus 800 may cancel the existing vehicle boarding and alighting location and designate a new vehicle boarding and alighting location by transmitting a GPS-converted location value corresponding to the AR graphic object.

In association with FIG. 17, FIGS. 18 and 19 are views illustrating examples, respectively, in which the vehicle boarding location and the vehicle alighting location are recommended on the basis of the vehicle boarding and alighting difficult attributes of the ride-hailing vehicle.

The AR service-providing apparatus 800 may render the AR graphic object at the vehicle boarding- and alighting-allowed location in such a manner that the recommended or non-recommended vehicle boarding and alighting location is provided on the three-dimensional neighboring-region map based on the vehicle boarding- and - alighting difficulty attributes.

When a selection input is applied to the AR graphic object representing the recommended or non-recommended vehicle boarding and alighting location, the AR service-providing apparatus 800 may render a corresponding real street view, that is, an MR image, based on the three-dimensional neighboring-region map.

At this point, the vehicle boarding- and -alighting difficulty attributes may include one of the following: road information, building information, or terrain information on the 3-dimensional neighboring-region map. In addition, a recommended or non-recommended vehicle boarding and alighting location based on the vehicle boarding and alighting difficult attributes may be specifically determined based on three-dimensional map building, roads, terrain-related polygonal and text data, the unique ID of each neighboring building, the unique ID of each road section, the location information of the passenger, and the location information of the vehicle.

In addition, the term "vehicle boarding- and alighting-difficulty attributes" may be used in a broad sense to include all attributes that affect the possibility that the unmanned vehicle can come to a stop. For example, vehicle boarding- and alighting-difficulty attributes may be related to a vehicle boarding and alighting location for public transportation, a shuttle station, a stopping-prohibited section stipulated by the traffic laws, a section under construction, an accident-prone section, a section with a currently highly congested traffic level, a section where current vehicle-boarding service calls occur frequently, and a section with a guardrail installed on walking paths.

According to an embodiment, the AR service-providing apparatus 800 may determine a recommended vehicle boarding and alighting location by calculating a place-based walking distance to which a difficulty level is assigned. For example, the recommended vehicle boarding and alighting locations are arranged in increasing order of distance from the location of the passenger and in increasing order of the vehicle boarding- and alighting-difficulty level. The top several recommended vehicle boarding and alighting locations are finally determined from among the arranged recommended vehicle boarding and alighting locations.

According to an embodiment, the AR service-providing apparatus 800 may determine a non-recommended vehicle boarding and alighting location on the basis of traffic situation information. At this point, the recent traffic situation information collected by performing an update after a predetermined time has elapsed relative to the vehicle's estimated time of arrival or after a predetermined distance has been traveled is used as the traffic situation information.

The AR service-providing apparatus 800 may render distinguishable color coding between the recommended vehicle boarding and alighting location and the non-recommended vehicle boarding and alighting location in such a manner as to be intuitively recognizable by the passenger. The passenger may intuitively recognize the vehicle boarding- and alighting-difficulty attributes by providing the three-dimensional neighboring-region map and the AR object in this manner.

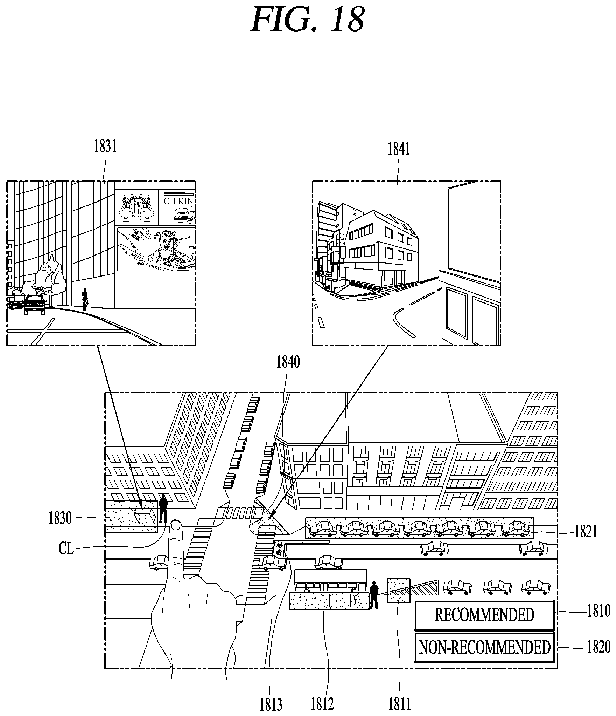

With reference to FIG. 18, based on passenger location information CL, first graphic objects 1811, 1812, 1813, and 1830 representing recommended vehicle boarding locations are rendered on the three-dimensional neighboring-region map. For example, the first graphic objects 1811, 1812, 1813, and 1830 may be displayed at locations that correspond to a stop-waiting section, a stopping-allowed section such as a stop, a non-congested traffic section, and a ride-sharing-dedicated section, respectively. In addition, second graphic objects 1821 and 1840 representing the non-recommended vehicle boarding-prohibited location may also be rendered onto the three-dimensional neighboring-region map based on the passenger location information CL. For example, the second graphic objects 1821 and 1840 may be displayed at locations that correspond to a congested traffic section and a section with a guardrail installed on walking paths, respectively.

With reference to FIG. 18, when a selection input is applied to a recommendation icon 1810, only first graphic objects 1811, 1812, 1813, and 1830 representing only recommended vehicle boarding locations are displayed in a highlighted state, and graphic objects representing non-recommended vehicle boarding locations are hidden from display.

Conversely, with reference to FIG. 18, when an input selection is applied to a non-recommendation icon 1820, only second objects 1821 and 1840 representing only non-recommended vehicle boarding locations are displayed in a highlighted state, and graphic objects representing a recommended vehicle boarding location are hidden from display.

In a case where a real view or an MR view of at least one of the recommended and non-recommended vehicle boarding locations illustrated in FIG. 18 is available, the real view or the MR view is output when the corresponding location is selected. For example, in a case where a selection input is applied to a location where the first graphic object 1830 is displayed, a real view or an MR view 1831 for checking a ride-sharing-dedicated display pops up. In addition, for example, if a selection input is applied to a location where the second graphic object 1840 is displayed, a real view or an MR view 1841 for checking the display of a guardrail installed on walking paths pops up.

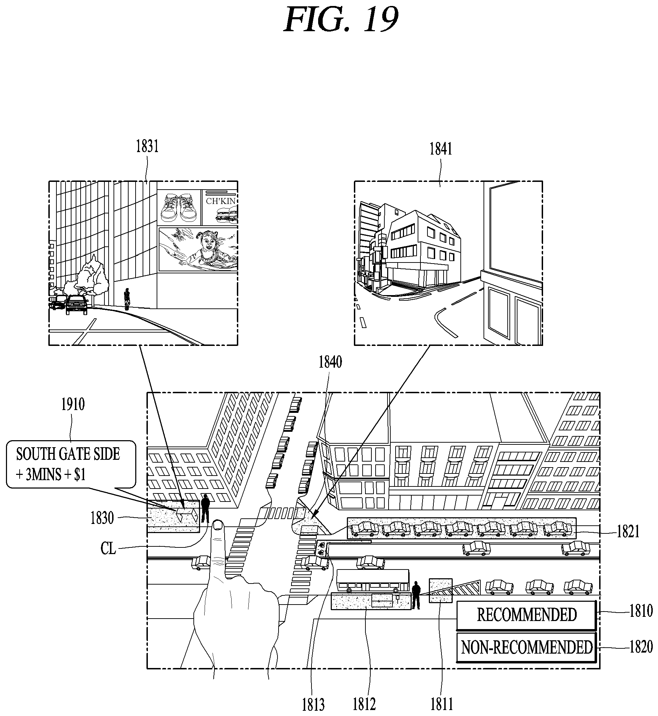

FIG. 19 is a view illustrating an example in which the three-dimensional neighboring-region map based on the passenger location information CL, illustrated in FIG. 18, is applied to an alighting location at a destination. At this point, the passenger location information CL in FIG. 19 refers to a location at the destination that is input or set in advance by the passenger.

With reference to FIG. 19, in a case where a selection input is applied to the first graphic object 1830 representing the recommended vehicle alighting location, the AR service-providing apparatus 800 may render an AR word balloon image 1910 including additional information, such as information about a corresponding location and information about additional driving distance, driving time, and additional fees that occur when changing to the corresponding location. The AR service-providing apparatus 800 may transmit GPS-converted location information matched to the changed alighting location information to the ride-hailing vehicle, based on the selection of a changed alighting location, the selection being made on the basis of the AR word balloon image 1910 rendered on the three-dimensional neighboring-region map.

In this manner, in embodiments of the present disclosure, the three-dimensional neighboring-region map may be provided based on the passenger location information in such a manner that a difficult level of boarding the ride-hailing vehicle can be easily ascertained. Furthermore, the recommended or non-recommended vehicle boarding and alighting location may be provided, and associated additional information may be provided intuitively through the AR image or the MR view.

According to an embodiment, the processor 830 of the AR service-providing apparatus 800 may change the vehicle boarding and alighting location based on the selection input applied to the AR graphic object. Furthermore, the processor 830 may transmit information about the changed vehicle boarding and alighting location to the vehicle through the communication unit 810.

At this point, AR path information for providing guidance on the changed boarding and alighting location is displayed on the three-dimensional map shown on the display 820 of the AR service-providing apparatus 800.

Specifically, in a case where a walking path is changed according to the changed vehicle boarding and alighting location, the AR service-providing apparatus 800 may display a walking path from the current location of the passenger or the current location of the ride-hailing vehicle to the changed vehicle boarding and alighting location on roads shown on a three-dimensional map.

In addition, although not illustrated, when the ride-hailing vehicle, after entering the second distance," determines that traffic congestion of the vehicle boarding location that is input or set in advance is heavy, the ride-hailing vehicle may output guidance information through the external E-Ink or the external display of the ride-hailing vehicle in such a manner that the passenger moves a predetermined distance away from the designated vehicle boarding location. For example, the message "Vehicle is moving a little forward to come to a stop" may be displayed through the hat-shaped light, the external E-Ink, and the external display.

According to an embodiment, when the ride-hailing vehicle onto which the AR image is rendered enters the vehicle boarding-allowed section, the processor 830 of the AR service-providing apparatus 800 may request the ride-hailing vehicle, through an external camera of the ride-hailing vehicle, to check the surrounding situation that is based on the location information of the passenger. Subsequently, in response to a request from the AR service-providing apparatus 800, the processor 830 may render the AR graphic object representing the vehicle boarding and alighting location on the three-dimensional map by taking into consideration the vehicle boarding- and alighting-difficulty level.

In this manner, according to embodiments of the present disclosure, a vehicle boarding- and alighting-difficulty level that is difficult to ascertain on two-dimensional map information may be ascertained. In addition, since a real street view is rendered based on the three-dimensional map information and displayed, this display is significantly helpful for structurally understanding the surroundings, even in a case where the passenger requests the ride-hailing vehicle while at an unfamiliar place. In addition, if necessary, the vehicle boarding and alighting location can be easily changed based on the three-dimensional map information and recognized by the vehicle.

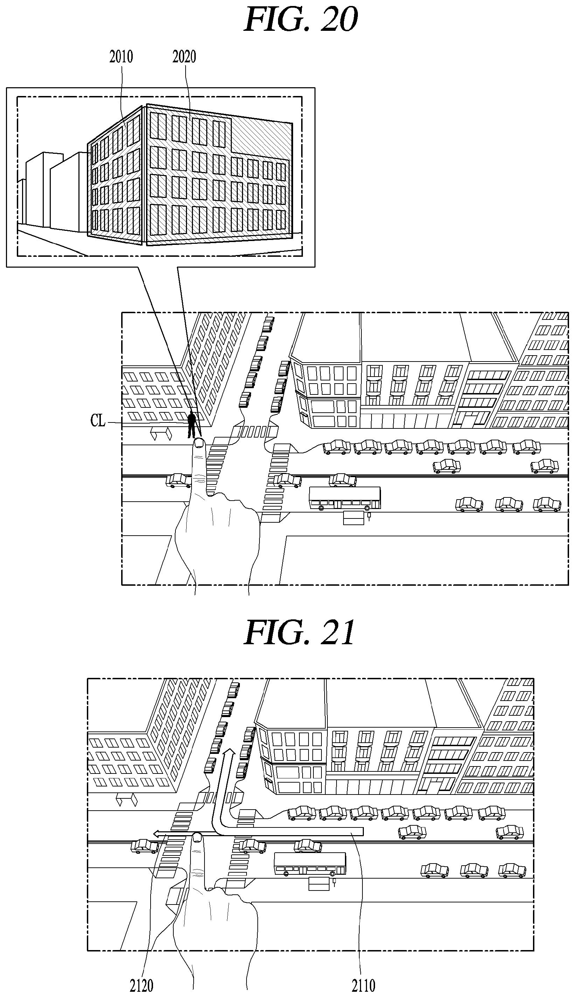

FIG. 20 is a view illustrating a method of selecting a vehicle alighting direction using a highlighted structure on the three-dimensional map associated with an embodiment of the present disclosure.

In addition, FIG. 21 is a view illustrating a method of changing a vehicle path using the three-dimensional map information associated with the embodiment of the present disclosure.

First, with reference to FIG. 20, a highlighted display is rendered onto a neighboring structure based on the passenger location information CL displayed on the 3-dimensional neighboring-region map. At this point, the neighboring structure refers to a structure that can be seen with the naked eye when the passenger alights from the vehicle. Examples of the neighboring structure may include a neighboring building, a signboard, a building entrance, a stop, a sculpture, and the like. In addition, the ID or name of the neighboring structure may be displayed in the form of an AR word balloon as an augmented-reality overlay on the neighboring structure.

At this point, highlighted images 2010 and 2020 with distinguishable colors are displayed on at least one of the following: the front surface, the left lateral surface, the right lateral surface, or the rear surface of the structure. The passenger may accurately designate an alighting direction from the vehicle by selecting one of the highlighted images 2010 and 2020.

Specifically, on the basis of a selection input applied to one of the highlighted images 2010 and 2020 with distinguishable colors, for example, a first image 2010 displayed on the structure, the AR service-providing apparatus 800 recognizes a direction corresponding to the image 2010 on a first surface as a direction pointing toward the vehicle alighting location and transmits information about the vehicle alighting direction to the vehicle. Similarly, the AR service-providing apparatus 800 may also recognize, as a direction pointing toward the vehicle alighting location, a direction corresponding to the image 2020 on a second surface and may transmit information about the direction of the vehicle alighting location to the vehicle. Accordingly, the passenger may more accurately designate the desired vehicle alighting direction.

To this end, the processor 830 of the AR service-providing apparatus 800 may render a plurality of AR images for designating a direction pointing toward the vehicle boarding and alighting location onto a structure included in a real street view image. In addition, the processor 830 may determine a direction of the structure, the direction corresponding to an AR image selected from among the plurality of AR images as a direction pointing toward the vehicle boarding and alighting location. In addition, the processor 830 may operate in such a manner as to transmit, through the communication unit 810, information about the vehicle boarding and alighting location corresponding to the structure direction determined from the selection input to the ride-hailing vehicle.

After boarding the ride-hailing vehicle, the passenger may change a movement path from a vehicle's preset setting through the AR service-providing apparatus 800 (provided in the ride-hailing vehicle).

With reference to FIG. 21, for example, in a state where a first movement path 2110 in accordance with the vehicle's preset setting is displayed on the MR map view, a second movement path 2120 is generated on the basis of input applied outside the first movement path, and one portion of the generated second movement path 2120 is rendered in a manner that overlaps the first movement path 2110.

Subsequently, the AR service-providing apparatus 800 removes the display of the first movement path 2110 from the MR map view on the basis of the selection input applied to the second movement path 2120, and changes the driving path to follow the second movement path 2120. The AR service-providing apparatus 800 may transmit information about the second movement path 2120, which results from changing the driving path, to the vehicle, thereby enabling the vehicle to change the current driving path.

Specifically, after the passenger boards the ride-hailing vehicle, while the ride-hailing vehicle is being driven, a first carpet image representing the current driving path is displayed on the MR view map in the AR service-providing apparatus 800. In addition, a second carpet image representing another driving path that serves as a detour may be displayed in a manner that overlaps with one portion of the first carpet image. At this point, a change to the other driving path that serves as a detour may be determined by taking into consideration both the traffic situation in the vicinity of the ride-hailing vehicle and the time taken for the ride-hailing vehicle to reach an intersection at which the driving path is changed from the first carpet image to the second carpet image.

The passenger may select the second carpet image displayed on the MR view map of the AR service-providing apparatus 800, thereby changing the driving path of the ride-hailing vehicle. In this case, a preview image, in which the ride-hailing vehicle passes through the intersection along the selected detour on the MR view map, may be provided in the form of a three-dimensional image on the display 820 of the AR service-providing apparatus 800. In addition, a message or voice saying, "Move to the detour?" may be output, thereby guiding the passenger toward a final selection.

In addition, according to an embodiment, specifically, when a destination-change item is selected through the AR service-providing apparatus 800, the MR map view centered on a previously input or set first destination is displayed. In this case, in the display MR map view, a plurality of vehicle alighting locations within a predetermined radius from the center of the first destination are recommended, and AR image objects are rendered onto the plurality of recommended vehicle alighting locations, respectively. Next, when one is selected from among the plurality of recommended vehicle alighting locations, the AR service-providing apparatus 800 recognizes the corresponding location as a second destination and transmits location information of the second destination to the vehicle in such a manner that the vehicle alighting location of the vehicle is changed to the second destination.

According to the embodiments described above, the passenger may easily understand neighboring structures through the MR view map and may conveniently change the vehicle boarding/alighting location, thereby providing the resulting boarding/alighting location to the vehicle. In addition, a desired driving path may be easily selected and changed after checking a plurality of driving paths provided through the MR view map.

A method of accurately recognizing the location of the second passenger waiting at a waypoint and transmitting the location of the second passenger to the vehicle after the first passenger boards the vehicle, according to an embodiment of the present disclosure, is described. This method is similar to the above-described method of recognizing and changing the vehicle boarding location in that the second passenger waiting at the waypoint "has not yet boarded the vehicle," but is different from the above-described method in that the first passenger "has already boarded the vehicle." That is, the location of the waypoint is set by the first passenger, and therefore, the second passenger is restricted from changing the waypoint to the second passenger's own location.

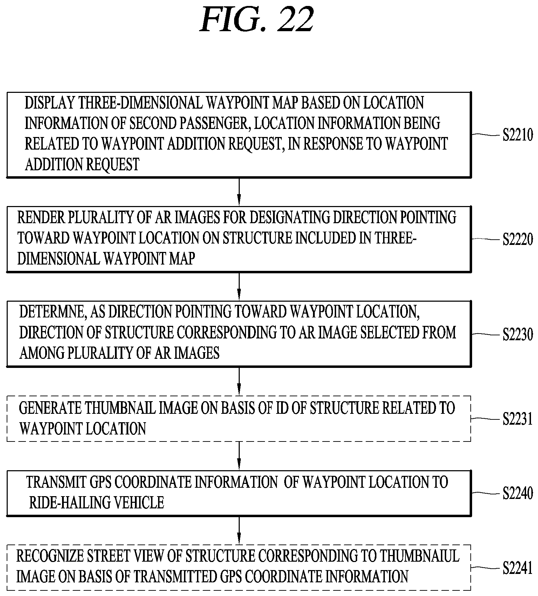

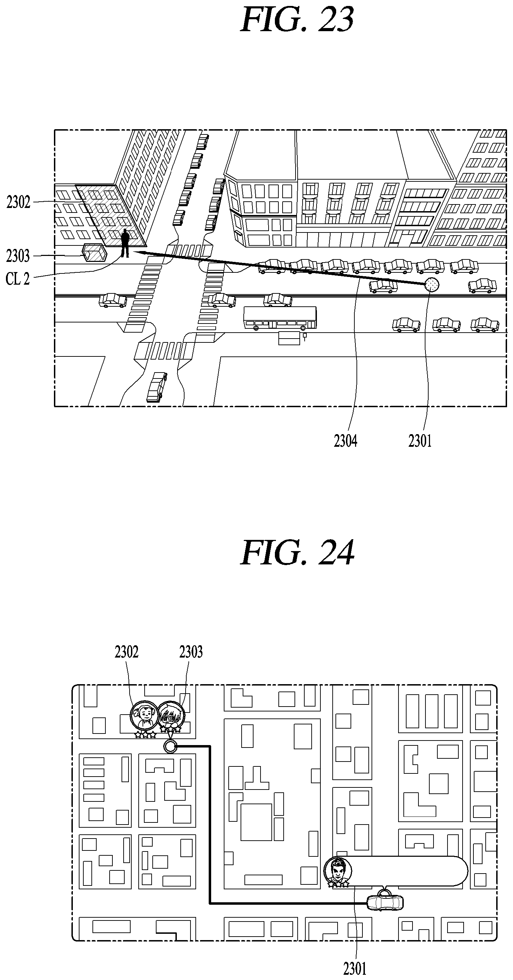

FIGS. 22 and 23 are a flowchart and an exemplary view, respectively, that are referenced to describe a method in which the second passenger provides location information of the waypoint using the third-dimensional map information associated with the embodiment of the present disclosure.

First, with reference to FIG. 22, in response to a waypoint addition request from the first passenger, the AR service-providing apparatus 800 may display a three-dimensional waypoint map based on location information of the second passenger, the location information being related to the waypoint addition request (S2210).

At this point, the waypoint addition request is performed through the AR service-providing apparatus 800 carried by the first passenger. However, the location information of the second passenger is selected and provided through the AR service-providing apparatus 800 carried by the second passenger. Accordingly, when the vehicle approaches a waypoint location that is input or set through the AR service-providing apparatus 800 carried by the first passenger, the control authority is granted to the AR service-providing apparatus 800 carried by the second passenger through the AR service-providing apparatus 800 carried by the first passenger, the service platform, or the vehicle. At this point, the assignment of the control authority refers to the restricted grant of the authority to control an operation related to the waypoint location.

Accordingly, the AR service-providing apparatus 800 carried by the second passenger may render, on the MR view map, a plurality of AR images for designating a direction pointing toward the waypoint location on a structure included in the three-dimensional waypoint map (S2220).

This rendering is intended to provide accurate location information of the second passenger using the structure on the MR map view, on the assumption that the location of the second passenger does not change.

Specifically, with reference to FIG. 23, in the MR view map displayed on the AR service-providing apparatus 800, highlighted images 2302 and 2303 may respectively be displayed on neighboring structures based on location information CL 2 of the second passenger. The second passenger may select a highlighted image corresponding to a structure closer to the current location of the second passenger from among the highlighted images 2302 and 2303 and provide the second passenger's own current location.

For example, in a case where a selection input is applied to the highlighted image 2302 displayed at the location of a building entrance in FIG. 23, the AR service-providing apparatus 800 transmits information about the displayed highlighted image 2302 to the ride-hailing vehicle, thereby changing an initial waypoint location 2301 stored in the ride-hailing vehicle to a location corresponding to the highlighted image 2302.

With reference back to FIG. 22, the AR service-providing apparatus 800 may determine, as the direction pointing toward the waypoint location, a direction of a structure corresponding to an AR image selected from among a plurality of highlighted AR images on the MR view map (S2230).

In some embodiments, the AR service-providing apparatus 800 may generate a thumbnail image on the basis of an ID of a structure related to the waypoint location (S2240). However, at the request of the second passenger, the AR service-providing apparatus 800 may operate selectively to perform this operation.

Subsequently, the AR service-providing apparatus 800 transmits GPS coordinate information of the waypoint location to the ride-hailing vehicle (S2240). Accordingly, the vehicle may accurately recognize the location of the waypoint where the second passenger is waiting, thereby guiding the second passenger to board the vehicle. Operations related to guiding the second passenger to board the vehicle are described as being the same as or similar to those in the embodiments, which are described with reference to FIGS. 11 to 16.

In some embodiments, the vehicle may recognize a street view of a structure corresponding to a thumbnail image on the basis of the GPS coordinate information transmitted from the AR service-providing apparatus 800.

Specifically, while the vehicle is being driven toward the waypoint location on the basis of the GPS coordinate information transmitted by the vehicle, when a structure corresponding to the thumbnail image is recognized by the first passenger or by the AR service-providing apparatus 800 of the vehicle, the vehicle may be accurately driven toward the location of the second passenger through a street view around the structure, starting from the corresponding to location. When approaching the corresponding location, the vehicle may finally determine the waypoint location by taking into consideration vehicle boarding- and alighting-difficulty attributes, and may perform an operation of guiding the second passenger to board the vehicle.

When the addition of the waypoint is completed, the waypoint location, set by the first passenger, and information about the calculated arrival estimated time, are transferred, as ride-hailing schedule information, to the AR service-providing apparatus 800 carried by the second passenger through the AR service-providing apparatus 800 carried by the first passenger.

In an embodiment, the AR view or the MR view for providing guidance on boarding at the changed waypoint location may be provided to the AR service-providing apparatus 800 carried by the second passenger by taking into consideration the vehicle boarding-difficulty attributes, such as boarding-prohibited attributes of the waypoint preset by the first passenger. That is, when the location of the second passenger can be accurately set through the AR service-providing apparatus 800 carried by the first passenger, there is no need to grant the control authority to the second passenger.

Conversely, when the control authority is granted to the second passenger and the waypoint location is accurately transferred through the AR service-providing apparatus 800 carried by the second passenger, for example, in FIG. 23, feature information of the highlighted structure may be transferred to the vehicle in response to input applied to the highlighted image 2302. This transfer is intended to determine the exact boarding location by instead using a structure located in the vicinity of a street at which the second passenger is waiting, because the first passenger and the vehicle do not know the external features of the second passenger at the waypoint location.

With reference to FIG. 23, a movement path 2304 from a first location 2301 toward a second location 2302 may be displayed on the MR view map when the waypoint is finally determined to be the waypoint location changed by the second passenger from the initially input or set waypoint location 2301, that is, as a location of a structure corresponding to the highlighted image 2302.

When there is no structural building around the second passenger, GPS-based coordinate information of the AR service-providing apparatus 800 carried by either the second passenger or directly input location information may be transferred to the vehicle, thereby changing the waypoint location.

FIG. 24 is a view that is referenced to describe a situation in which ride-sharing applicants are displayed using the three-dimensional map information associated with the embodiments of the present disclosure.

For example, in the case of a multi-passenger unmanned vehicle, a first thumbnail 2301 and second and third thumbnails 2302 and 2303 may be rendered on the MR view map in such a manner that the first passenger determines whether to share a ride with a plurality of candidate passengers applying for ride sharing. The first thumbnail 2301 represents the location of the first passenger who has already boarded the vehicle. The second and third thumbnails 2302 and 2303 represent respective locations of candidate passengers.

At this point, preference information (e.g., a rating or the like) related to the selection of one from among candidate passengers may be displayed on each of the second and third thumbnails 2302 and 2303. When one candidate passenger is selected on the basis of a selection input applied to one of the second and third thumbnails 2302 and 2303, the location of the candidate passenger may be determined based on the vehicle boarding-difficulty attributes determined from external features of the candidate passenger and the surrounding situation that are recognized through the external camera of the vehicle.

In some embodiments, in a case where the first passenger approves a ride-sharing request, a carpet image 2301 representing a movement path to the determined location of the candidate passenger may be displayed on the MR view map.

Although not illustrated, in a case where an emergency occurs while the ride-hailing vehicle is being driven, an emergency response protocol for promptly controlling the unmanned vehicle from the outside may be guided to AR through the camera of the AR service-providing apparatus of the rescue team.

In another embodiment, when an act such as opening the vehicle door is detected due to a sudden situation involving the passenger while the ride-hailing vehicle is being driven, a pull-over process may be performed, and a nearby temporary-stop location may be displayed on the MR view map. Then, the related information may be provided to the passenger, taking into consideration vehicle alighting-difficulty attributes.

The above-described method of providing the service for requesting a ride-hailing vehicle may be provided in the form of a computer program stored on a computer-readable recording medium, to be executed on a computer. The computer-readable recording medium may be a medium on which a program executable on a computer can be permanently stored or temporarily stored for execution or download. In addition, examples of the computer-readable recording medium may include various recording means or storage means formed by combining one or several hardware components. The computer-readable recording medium is not limited to a medium capable of direct access to a computer system. The computer-readable recording medium may also be present across a network in a distributed manner. Examples of the computer-readable recording medium may include: magnetic media, such as hard disks, floppy disks, and magnetic tapes; optical recording media, such as CD-ROMs and DVDs; magneto-optical media, such as floptical disks; and memory devices, such as ROMs, RAMs, and flash memory devices, which are configured to store program commands. including ROM, RAM, and flash memory. In addition, other examples of the computer-readable recording medium may include recording media and storage media that are managed by an application store that distributes applications, or by a site, a server, or the like that supplies and distributes various software items.

As described above, in the method of and the system for providing the service for requesting a ride-hailing vehicle, and the AR service-providing apparatus for the method and the system, according to the embodiments of the present disclosure, remote interactions between the unmanned vehicle and the passenger may be naturally achieved, and the convenience of performing authentication for vehicle boarding through mutual recognition and of changing the boarding and alighting location may be further enhanced.

In addition, according to the embodiments of the present disclosure, the ride-hailing vehicle requested by the passenger can be accurately identified, and the ride-hailing vehicle can also specify and authenticate the passenger in advance through the thumbnail selected by the passenger before boarding the ride-hailing vehicle. Accordingly, interaction and authentication can be smoothly performed, and the unmanned vehicle can provide high-quality services such as accurately guiding the passenger to board the ride-hailing vehicle.

In addition, according to an embodiment of the present disclosure, in a case where the vehicle boarding location or the alighting location designated to the passenger is not suitable as a place for vehicle boarding or vehicle alighting, a location suitable for vehicle boarding or vehicle alighting can be accurately determined provided, and the changed movement path can be intuitively recognized by the passenger.

In addition, according to some embodiments of the present disclosure, even in a case where the first passenger designates the waypoint, the waypoint location can still be provided by the second passenger. Accordingly, even in a station in which the first passenger does not know the second passenger, ride sharing can be naturally achieved using the AR and MR technologies.

The further scope of applicability of the present disclosure will become apparent from the detailed description set forth above. However, it will be apparent to a person of ordinary skill in the art that various alterations and modifications to the present disclosure may be readily made without departing from the spirit and scope of the technical idea of the present disclosure. The detailed descriptions of specific embodiments, such as preferred embodiments of the disclosure, should be understood as illustrative examples only.

The features, structures, effects, and the like described above in the embodiments are included in at least one embodiment of the disclosure, and are not necessarily limited to only one embodiment. Furthermore, the features, structures, effects, and the like described in each embodiment may be combined or modified in other embodiments by a person of ordinarily skill in the art to which the embodiments pertain. Therefore, the contents related to these combinations and modifications should be interpreted as falling within the scope of the present disclosure.

Although the foregoing description has focused on the embodiments, it will be apparent to a person of ordinary skill in the art to which the present disclosure pertains that these are presented for purposes of illustration and are not intended to limit the scope of the present disclosure, and that various modifications and applications not exemplified above are possible without departing from the essential characteristics of the embodiments. For example, each constituent element described in the embodiments may be configured in a modified manner. Variations concerning these modifications and applications should be interpreted as being included within the scope of the disclosure defined in the appended claims.

## Claims

1. An AR service-providing apparatus comprising:
a communication unit that acquires location information of a ride-hailing vehicle;
a display on which a three-dimensional map, resulting from rendering an AR image that is based on vehicle information of the ride-hailing vehicle and the location information thereof onto the ride-hailing vehicle, is displayed; and
a processor that, in response to a request, converts the three-dimensional map into a three neighboring-region map that is based on location information of a passenger, and displays an AR graphic object at a vehicle boarding-and alighting-allowed location on the three-dimensional neighboring-region map, based on vehicle boarding- and alighting-difficulty attributes.

2. The AR service-providing apparatus of claim 1, wherein the AR graphic object comprises:
a first AR graphic object representing the vehicle boarding- and -alighting-allowed location and a second AR graphic object representing a vehicle boarding- and alighting-prohibited location,
wherein the first AR graphic object and the second AR graphic object are displayed on the three-dimensional neighboring-region map.

3. The AR service-providing apparatus of claim 1, wherein, when a selection input is applied to the AR graphic object, the processor causes a corresponding real street view image to be rendered based on the three-dimensional neighboring-region map.

4. The AR service-providing apparatus of claim 1, wherein the vehicle boarding- and alighting-difficulty attributes include one of the following: road information, building information, or terrain information on the 3-dimensional neighboring-region map, and
wherein the processor causes an AR graphic object representing a recommended vehicle boarding and alighting location to be rendered, based on the vehicle boarding- and alighting-difficulty attributes and the location information of the passenger.

5. The AR service-providing apparatus of claim 4, wherein, when the ride-hailing vehicle on which the AR image is rendered enters a vehicle boarding-allowed section, the processor requests the ride-hailing vehicle, through an external camera of the ride-hailing vehicle, to check the surrounding situation that is based on the location information of the passenger, and,
wherein, in response to the request, the processor causes the AR graphic object representing the recommended vehicle alighting location to be rendered, by taking into consideration the vehicle boarding- and alighting-difficulty level.

6. The AR service-providing apparatus of claim 5, wherein the processor changes a vehicle boarding and alighting location on the basis of a selection input applied to the AR graphic object and transmits information about the changed vehicle boarding and alighting location in such a manner that the ride-hailing vehicle performs an operation corresponding to the changed vehicle boarding and alighting location, and
wherein the display displays, on the three-dimensional map, AR path information for providing guidance on the changed vehicle boarding and alighting location.

7. The AR service-providing apparatus of claim 3, wherein the processor
causes a plurality of AR images for designating a vehicle boarding and alighting direction onto a structure included in the real street view image,
determines a direction of the structure, the direction corresponding to an AR image selected from among the plurality of AR images, as a direction pointing toward a vehicle boarding and alighting location, and
transmits information about the vehicle boarding and alighting location in the determined direction of the structure to the ride-hailing vehicle.

8. The AR service-providing apparatus of claim 1, wherein the request includes a waypoint addition request,
wherein the display displays a three-dimensional waypoint map on the basis of location information of a second passenger, the location information being related to the waypoint addition request, and
wherein the processor
causes a plurality of AR images for designating a direction pointing toward a waypoint location on a structure included in the three-dimensional waypoint map to be rendered,
determines, as the direction pointing toward the waypoint location, a direction of a structure corresponding to an AR image selected from among the plurality of AR images, and
transmits GPS coordinate information of the waypoint location to the ride-hailing vehicle.

9. The AR service-providing apparatus of claim 8, wherein the processor
generates a thumbnail image on the basis of an ID of the structure related to the waypoint location,
transmits information about the generated thumbnail image to the ride-hailing vehicle and
causes the ride-hailing vehicle to recognize a street view of a structure corresponding to the thumbnail image on the basis of the transmitted GPS coordinate information.

10. A method of providing a service for requesting a ride-hailing vehicle, the method comprising:
acquiring location information of the ride-hailing vehicle;
rendering an AR image that is based on the location information of the ride-hailing vehicle and vehicle information thereof onto the ride-hailing vehicle and displaying the rendered AR image on a three-dimensional map;
converting, in response to a request, the three-dimensional map into a three-dimensional neighboring-region map that is based on location information of a passenger; and
displaying an AR graphic object at a vehicle boarding- and alighting-allowed location on the three-dimensional neighboring-region map, based on vehicle boarding- and alighting-difficulty attributes.

11. The method of claim 10, wherein, in the displaying of the AR graphic object, a first AR graphic object representing a vehicle boarding- and -alighting-allowed location and a second AR graphic object representing a vehicle boarding- and alighting-prohibited location are displayed on the three-dimensional neighboring-region map.

12. The method of claim 10, further comprising, after the displaying of the AR graphic object:
rendering a corresponding real street view image based on the three-dimensional neighboring-region map, when a selection input is applied to the AR graphic object.

13. The method of claim 10, wherein the vehicle boarding- and alighting-difficulty attributes include one of the following: road information, building information, or terrain information on the 3-dimensional neighboring-region map, and
wherein, in the displaying of the AR graphic object, an AR graphic object representing a recommended vehicle boarding and alighting location is rendered based on the vehicle boarding- and alighting-difficulty attributes and the location information of the passenger.

14. The method of claim 10, further comprising:
rendering a plurality of AR images for designating a direction pointing toward a waypoint location on a structure in a three-dimensional waypoint map;
determining, as the direction pointing toward the waypoint location, a direction of a structure corresponding to an AR image selected from among the plurality of AR images; and
transmitting GPS coordinate information of the waypoint location to the ride-hailing vehicle,
wherein, in the converting of the three-dimensional map into the three-dimensional neighboring-region map, in response to a waypoint addition request, the three-dimensional waypoint map is displayed on the basis of location information of a second passenger, the location information related to the waypoint addition request.

15. The method of claim 14, wherein the determining of the waypoint location comprises:
generating a thumbnail image on the basis of an ID of a structure related to the waypoint location, and
wherein the transmitting of the GPS coordinate information of the waypoint to the ride-hailing vehicle comprises:
transmitting information about the generated thumbnail image to the ride-hailing vehicle and causing the ride-hailing vehicle to recognize a street view of a structure corresponding to the thumbnail image on the basis of the transmitted GPS coordinate information.
